# FASCICULE DE BREVET EUROPEEN

(11) **EP 2 155 827 B1**
(45) Date de publication et mention de la délivrance du brevet: **03.07.2013**
(21) Numéro de dépôt: 08760208.2
(22) Date de dépôt: 29.05.2008
(51) Int. Cl.: C09D 5/44, C25D 13/04, C25D 9/02

(54) **PROCEDE DE FORMATION D'UN FILM ORGANIQUE METTANT EN OEUVRE UN GEL, LEDIT GEL ET SON UTILISATION**
VERFAHREN ZUR BILDUNG EINES ORGANISCHEN FILMS UNTER VERWENDUNG EINES GELS, DAS GEL UND DESSEN VERWENDUNG
METHOD OF FORMING AN ORGANIC FILM USING A GEL, SAID GEL AND USE THEREOF

(30) Priorité: 01.06.2007 FR 0755424
(43) Date de publication de la demande: 24.02.2010
(73) Titulaire: Commissariat à l'Énergie Atomique et aux Énergies Alternatives, 75015 Paris (FR)
(72) Inventeur: PALACIN, Serge, F-78180 Montigny Le Bretonneux (FR); MOUANDA, Brigitte, F-78730 Saint Arnoult En Yvelines (FR)
(74) Mandataire: Ilgart, Jean-Christophe
(86) Numéro de dépôt international: PCT/EP2008/056617
(87) Numéro de publication internationale: WO 2008/145696

(56) Documents cités:
- WO-A-03/018212
- FR-A- 2 871 162
- M. KANEKO, N. MOCHIZUKI, K. SUZUKI, H. SHIROISHI, K. ISHIKAWA: CHEMISTRY LETTERS, 2002, pages 530-531, XP008086665 cité dans la demande

## Description

### DOMAINE TECHNIQUE

La présente invention concerne le domaine des revêtements organiques de surface, lesdits revêtements étant sous la forme de films organiques. Elle est plus particulièrement relative à l'utilisation d'un gel, comme cellule électrochimique et de solutions convenablement sélectionnées afin de permettre la formation simple et reproductible de films organiques par greffage électrochimique sur des surfaces conductrices ou semi-conductrices de l'électricité.

### ÉTAT DE LA TECHNIQUE ANTÉRIEURE

La modification chimique de substrats métalliques ou semi-conducteurs est un domaine de recherche très important depuis trois décennies. Au fil du temps, plusieurs méthodes de modification de surface ont été proposées et évaluées.

Le procédé le plus simple est le dépôt d'une solution de polymères à la tournette (par centrifugation) ou « spin coating ». Ce procédé ne nécessite aucune affinité particulière entre les macromolécules et le substrat à revêtir, et ne développe pas de liaisons fortes entre la surface et les polymères déposés.

L'auto-assemblage de monocouches est également une technique très simple à mettre en oeuvre (Ulman A., « An introduction to ultrathin organic films from Langmuir-Blodgett films to self-assembly », 1991, Boston, Academic Press). Elle requiert toutefois l'utilisation de précurseurs, généralement moléculaires, possédant une affinité suffisante pour la surface d'intérêt à revêtir. On parlera alors de couple précurseur-surface, tels que les composés soufrés ayant une affinité pour l'or ou l'argent ; les tri-halogéno silanes pour les oxydes comme la silice ou l'alumine ; et les polyaromatiques pour le graphite ou les nanotubes de carbone.

Dans tous les cas, la formation du film repose sur une réaction chimique spécifique entre une partie du précurseur moléculaire (l'atome de soufre dans le cas des thiols par exemple) et certains sites « récepteurs » de la surface. Une réaction de chimisorption assure l'accrochage. Cependant, les surfaces d'intérêt à revêtir montrent généralement une stabilité médiocre et ce, en raison de la désorption graduelle des espèces adsorbées.

Une autre approche vise à former une liaison covalente entre le substrat à revêtir et la couche modifiante. L'électrochimie est une technique qui permet d'atteindre cet objectif (Palacin, S. et al., "Molecule-to-metal bonds: electrografting polymers on conducting surfaces". Chem Phys Chem 2004, 10, 1468-1481).

Pendant de nombreuses années, le greffage d'un film de polymère sur une surface métallique était réalisé par électropolymérisation en boîte à gants, sous atmosphère inerte. En effet, il s'agit souvent d'une polymérisation anionique (réduction des monomères à la cathode) qui impose des conditions draconiennes : un milieu aprotique (solvant et réactifs anhydres) et l'utilisation de monomères possédant des fonctions inertes vis-à-vis des anions très basiques. Les monomères utilisés appartiennent à la famille des acrylates ou méthacrylates, les acrylonitriles ou méthacrylonitriles soit des vinyliques qui ne possèdent pas de fonctions protiques telles que acide, alcool, amine ...(Palacin S. et al., « Molecule-to-metal bonds : electrografting polymers on conducting surfaces. », ChemPhysChem, 2004, 10, 1468).

Il est également possible d'utiliser l'électrochimie de manière « indirecte » afin de générer des radicaux qui permettront ensuite la polymérisation radicalaire d'un monomère (Zhang X. et al., « Studies of arenediazonium salts as a new class of electropolymerization initiator » J Appl Polym Sci 1999, 73, 2265).

La polymérisation radicalaire, largement utilisée industriellement, permet la synthèse d'une grande variété de polymères couplée avec la tolérance d'un milieu protique et aqueux.

La stratégie d'électrogreffage indirect consiste donc à combiner à la fois l'électroinitiation et la polymérisation radicalaire pour greffer un film de polymère sur un substrat métallique. L'illustration de ce procédé est décrite dans la demande de brevet français n°06/01804 et dans le brevet français n°2871162, dans lesquels l'électroinitiation permet de créer les radicaux. Ainsi, l'utilisation d'un sel de diazonium, le 4-NitroBenzene Diazonium Tétrafluoroborate (NBDT), conduit, par réduction électrochimique, à des radicaux libres aryles capables d'amorcer la polymérisation radicalaire d'un monomère vinylique en émulsion.

Malgré les avantages que présentent les techniques les plus récentes, leur mise en oeuvre demeure aujourd'hui encore fastidieuse. Cette dernière nécessite notamment l'utilisation de bains électrochimiques souvent mal adaptés pour revêtir des surfaces de grande taille, des surfaces peu accessibles et/ou orientées de telle sorte que les liquides s'écoulent à leur surface (surface de biais, effets de pesanteur), ou encore pour revêtir de manière précise des surfaces de petite taille (jusqu'à l'échelle nanométrique) avec des motifs précis sans l'utilisation de masques.

Dans un tout autre domaine, le gel d'agarose est très utilisé en biochimie pour l'électrophorèse des acides nucléiques mais aussi en immunoélectrophorèse pour la séparation des protéines. Ces gels gorgés d'eau ont également été utilisés comme nouveaux milieux réactionnels pour des réactions électrochimiques (Kaneko M. et al., « Molecular reactor for solution chemistry », Chem. Lett., 2002, 530) et des réactions photochimiques (Suzuki K. et al., « New quasi-solid materials as a medium for photochemical reactions », J. Phys. Chem. A 2003, 107, 5523).

Les systèmes colloïdaux correspondent à des systèmes dans lesquels des molécules à propriétés colloïdales ou des particules à propriétés colloïdales sont dispersées dans un milieu continu. Le système est tel que les molécules à propriétés colloïdales ou les particules à propriétés colloïdales ont au moins une dimension, sur les trois, comprise entre 1 nm et 1 µm, on parle de dimension colloïdale, ou tel que des discontinuités existent au sein du système à des distances de cet ordre. Il n'est pas nécessaire que les trois dimensions soient dans cet ordre de grandeur.

Le milieu continu, ou phase continue, et les molécules à propriétés colloïdales ou les particules à propriétés colloïdales, qui correspondent à la phase dispersée, sont chacun dans un état qui leur est propre. Une nomenclature particulière a été établie, elle est présentée dans le tableau (1) ci-dessous.

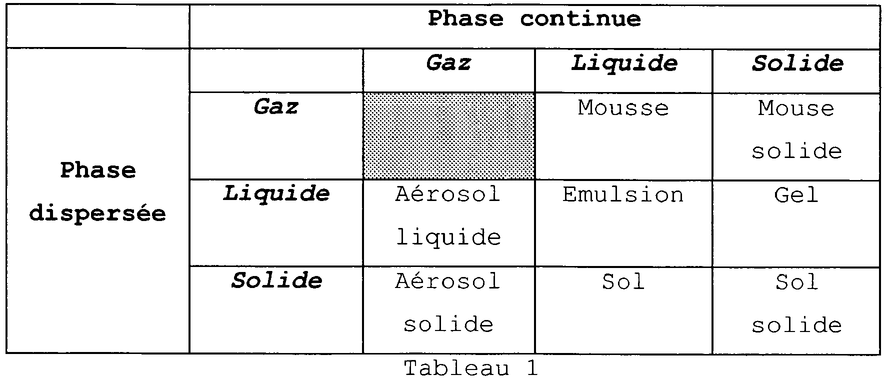

### EXPOSÉ DE L'INVENTION

Les inventeurs ont constaté de manière surprenante qu'il était possible d'employer des systèmes colloïdaux dont la phase continue est solide et la phase dispersée est liquide, connus sous le terme de gel, tel que le gel d'agarose, pour passer outre les problèmes aujourd'hui rencontrés dans le domaine de l'électrogreffage. La présente invention vise à s'affranchir des milieux purement liquides comme source de composants pour la préparation d'un film électrogreffé en utilisant un gel, comme cellule électrochimique. A ce jour, aucun article ou brevet ne se rapporte à l'utilisation de gels, tel que les gels d'agarose, comme cellule électrochimique pour réaliser l'électrogreffage d'un film polymère sur une surface conductrice ou semi-conductrice de l'électricité ou pour réaliser un greffage localisé.

L'invention consiste notamment en l'utilisation d'un système colloïdal dont la phase continue est solide et la phase dispersée liquide, i.e. un gel, constitué d'un solvant et de composés à propriétés colloïdales, comprenant une espèce chimique pouvant se chimisorber par voie radicalaire sur une surface conductrice ou semi-conductrice de l'électricité, et auquel est appliqué un potentiel au moins égal au potentiel de réduction de ladite espèce chimique, pour former un film organique sur une surface conductrice ou semi-conductrice de l'électricité.

L'invention correspond ainsi à un procédé de formation d'un film organique sur une surface conductrice ou semi-conductrice de l'électricité par application d'un potentiel électrique entre un gel, au contact de ladite surface, et ladite surface, caractérisé en ce que le gel comprend :
- un solvant protique,
- au moins un composé à propriétés colloïdales,
- au moins un primaire d'adhésion,
et en ce que le potentiel appliqué est au moins égal au potentiel de réduction du primaire d'adhésion.

Au sens de l'invention, un gel correspond notamment à un système chimique dans lequel il existe un réseau tridimensionnel constitué de composés à propriétés colloïdales susceptibles de former une matrice qui correspond à une phase continue solide. De tels composés peuvent être de nature organique, inorganique ou mixte. Ainsi le système peut également être de nature variée. Lorsqu'il est dit « de nature organique », l'ensemble des composés sont de nature organique. Lorsque les composés sont de nature organique, il s'agit généralement de macromolécules qui, typiquement, sont des molécules de masse moléculaire relative élevée dont la structure est formée essentiellement d'unités à multiples répétitions dérivées, de fait ou d'un point de vue conceptuel, de molécules de masse moléculaire faible. Les macromolécules le plus régulièrement employées sont généralement hautement ramifiées. Ainsi chaque unité constitutionnelle est essentiellement liée aux autres unités constitutionnelles et à la phase macroscopique limite par des voies permanentes à travers toute la macromolécule. Le nombre de ces voies augmente avec le nombre moyen de liaisons intermédiaires ; en moyenne les voies sont coextensives avec la macromolécule. Typiquement un gel est un matériau mou et gonflé de solvant. Capable de subir de grandes déformations, il est de nature élastique et plastique. Les gels sont généralement formés à partir d'au moins deux constituants : le solvant qui est un liquide « piégé » par un second composé qui forme un filet à trois dimensions, ou réseau, dans tout le solvant. Les composés susceptibles de former des gels sont étudiés depuis longtemps et sont connus de l'homme du métier.

L'invention peut être appliquée à de nombreuses surfaces. De manière non exhaustive, parmi les surfaces conductrices ou semi-conductrices de l'électricité, on peut employer une surface constituée d'un au moins des conducteurs ou semi-conducteurs suivants : les métaux et leurs alliages avec ou sans oxyde de surface, les métaux de transition, les métaux nobles, le fer, l'acier, comme l'acier inoxydable 316 L, le cuivre, le nickel, le cobalt, le niobium, l'aluminium, l'argent, le titane, le nitrure de titane, le tungstène, le nitrure de tungstène, le tantale, le nitrure de tantale, l'or, le platine, l'iridium et le platine iridié, le silicium avec ou sans son oxyde de surface, le germanium avec ou sans son oxyde de surface,. Selon un mode de réalisation préféré de l'invention, la surface employée est une surface d'or.

Par « solvant protique », on entend, dans le cadre de la présente invention, un solvant qui comporte au moins un atome d'hydrogène susceptible d'être libéré sous forme de proton.

Le solvant protique est avantageusement choisi dans le groupe constitué par l'eau, et particulièrement l'eau désionisée, l'eau distillée, acidifiées ou non ; l'acide acétique ; les solvants hydroxylés comme le méthanol et l'éthanol ;les glycols liquides, particulièrement ceux de faible poids moléculaire tels que l'éthylèneglycol, et leurs mélanges. Dans une première variante, le solvant protique utilisé dans le cadre de la présente invention n'est constitué que par un solvant protique ou par un mélange de différents solvants protiques. Dans une autre variante, le solvant protique ou le mélange de solvants protiques peut être utilisé en mélange avec au moins un solvant aprotique, étant entendu que le mélange résultant présente les caractéristiques d'un solvant protique et sera à ce titre considéré comme tel. L'eau est le solvant protique préféré, notamment l'eau acidifiée et, plus particulièrement, l'eau distillée acidifiée ou l'eau désionisée acidifiée.

Le terme « primaire d'adhésion » correspond, dans le cadre de la présente invention, à toute molécule organique susceptible, sous certaines conditions, de se chimisorber à la surface d'un support solide par réaction radicalaire tel qu'un greffage électrochimique et comportant une fonction réactive vis-à-vis d'un autre radical après chimisorption. De telles molécules peuvent être qualifiées de polymérisables dans la mesure où, par réaction radicalaire, elles peuvent conduire à la formation de molécules de masse moléculaire relativement élevée dont la structure est formée essentiellement d'unité à multiples répétition dérivées, de fait ou d'un point de vue conceptuel, de molécules de primaire. Dans un tel cas, le film organique formé selon le procédé de l'invention pourra être uniquement constitué d'unités dérivées du primaire d'adhésion.

Le primaire d'adhésion est avantageusement un sel d'aryle clivable choisi dans le groupe constitué par les sels d'aryle diazonium, les sels d'aryle d'ammonium, les sels d'aryle phosphonium et les sels d'aryle sulfonium. Dans ces sels, le groupe aryle est un groupe aryle qui peut être représenté par R tel que défini ci-après. Ces composés sont susceptibles de former un film polymérique ainsi que cela a été montré par exemple dans la demande internationale WO 03/018212.

Parmi les sels d'aryle clivables, on peut en particulier citer les composés de formule (I) suivante :

R-N₂⁺, A⁻ (I)

dans laquelle :
- A représente un anion monovalent, et,
- R représente un groupe aryle.

A titre de groupe aryle des sels d'aryle clivables et notamment des composés de formule (I) ci-dessus, on peut avantageusement citer les structures carbonées aromatiques ou hétéroaromatiques, éventuellement mono- ou polysubstituées, constituées d'un ou plusieurs cycles aromatiques ou hétéroaromatiques comportant chacun de 3 à 8 atomes, le ou les hétéroatomes pouvant être N, O, P ou S. Le ou les substituants peuvent contenir un ou plusieurs hétéroatomes, tels que N, O, F, Cl, P, Si, Br ou S ainsi que des groupes alkyles en C₁ à C₆ notamment.

Au sein des sels d'aryle clivables et notamment des composés de formule (I) ci-dessus, R est de préférence choisi parmi les groupes aryles substitués par des groupements attracteurs d'électrons tels que NO₂, COH, les cétones, CN, CO₂H, NH₂, les esters et les halogènes. Les groupes R de type aryle particulièrement préférés sont les radicaux nitrophényle et phényle.

Au sein des composés de formule (I) ci-dessus, A peut notamment être choisi parmi les anions inorganiques tels que les halogénures comme I⁻, Br⁻ et Cl⁻, les halogénoborates tels que le tetrafluoroborate, et les anions organiques tels que les alcoolates, les carboxylates, les perchlorates et les sulfonates.

A titre de composés de formule (I), il est particulièrement avantageux d'utiliser un composé choisi dans le groupe constitué par le tétrafluoroborate de phényldiazonium, le tétrafluoroborate de 4-nitrophényldiazonium, le tétrafluoroborate de 4-bromophényldiazonium, le chlorure de 4-aminophényldiazonium, le chlorure de 2-méthyl-4-chlorophényldiazonium, le tétrafluoroborate de 4-benzoylbenzènediazonium, le tétrafluoroborate de 4-cyanophényldiazonium, le tétrafluoroborate de 4-carboxyphényldiazonium, le tétrafluoroborate de 4-acétamidophényldiazonium, le tétrafluoroborate de l'acide 4-phénylacétique diazonium, le sulfate de 2-méthyl-4-[(2-méthylphényl)diazényl]benzènediazonium, le chlorure de 9,10-dioxo-9,10-dihydro-1-anthracènediazonium, le tétrafluoroborate de 4-nitronaphtalènediazonium et le tétrafluoroborate de naphtalènediazonium.

Avantageusement, dans le cas où le primaire d'adhésion est un sel d'aryle diazonium et, de préférence, un sel d'aryle de formule (I), le pH au sein du gel est inférieur à 7, en particulier inférieur à 5 et typiquement inférieur ou égal à 3. Il est recommandé de travailler à un pH compris entre 0 et 3. Si nécessaire, le pH au sein du gel peut être ajusté à la valeur désirée à l'aide d'un ou plusieurs agents acidifiants bien connus de l'homme du métier, par exemple à l'aide d'acides minéraux ou organiques tels que l'acide chlorhydrique, l'acide sulfurique, etc...

Il est bien entendu possible d'employer, à titre de primaire d'adhésion, simultanément des molécules de structure différentes et considérées individuellement comme des molécules de type « primaire d'adhésion ». Ainsi, par exemple, un mélange de différents primaires d'adhésion tels que précédemment décrits et notamment un mélange de différents aryles diazonium pourra être utilisé.

Les composés à propriétés colloïdales employées généralement pour la préparation des gels, notamment en biologie, sont utilisables dans le cadre de l'invention. Les définitions précédemment données pour les molécules et particules à propriétés colloïdales s'appliquent également aux composés à propriétés colloïdales susceptibles d'être mis en oeuvre dans le cadre de la présente invention. Parmi les composés à propriétés colloïdales, il est recommandé d'employer des composés de nature organique. A ce titre, il est possible d'employer des polymères organiques. Avantageusement, les composés à propriétés colloïdales présenteront peu de liaisons de type éthylènique, et de préférence pas de liaisons de type éthylènique. Aussi, il est préférable que les chaînes hydrocarbonées portées par les composés soient saturées. Il est possible par exemple d'utiliser des macromolécules comme les polysaccharides et, notamment, l'agarose, et plus particulièrement l'agarose à bas point de fusion, typiquement 86 ± 2°C, le chitosan, le xanthane, le carraghénane, l'agar, l'alginate ou leurs mélanges. Il est en effet possible d'employer des mélanges de deux ou plus polysaccharides différents tels qu'un mélange de carraghénane et d'agarose. On peut également citer à titre d'exemple le polyacrylamide qui est formé par polymérisation d'acrylamide en présence d'un agent de réticulation. Il est également possible d'employer un dérivé de polyacrylamide.

Il est préférable que le système colloïdal soit un gel élastomère. Ainsi, par exemple, parmi les polysaccharides, il est préférable d'employer l'agarose, et notamment l'agarose à bas point de fusion qui peut présenter une teneur en sulfate ≤ 0,12 % et permet de former par exemple un gel ayant une force ≥3200g/cm² à partir d'agarose à 1,5% (poids/volume) dans un solvant, ou encore le κ-carraghénane qui présente, au sein des carraghénanes, les propriétés les plus intéressantes pour former un gel.

La quantité de solvant qu'il est possible d'employer varie selon le souhait de l'utilisateur et les propriétés qu'il désire attribuer au système colloïdal. La quantité maximum est liée aux composés qui apportent les propriétés colloïdales. Dans le cas de composés comme les polysaccharides il est généralement recommandé de préparer des systèmes dans lesquels le rapport polysaccharide/solvant (poids/volume) est compris entre 0,5 et 4 %, typiquement 1,5 à 3 %. Il est par exemple possible de préparer un gel d'agarose dans lequel le rapport agarose/eau 0,15 g à 0,4 g / 10 ml.

Le potentiel de réduction du primaire d'adhésion est facilement déterminable par l'homme du métier et ce en utilisant des techniques expérimentales courantes en électrochimie. Le potentiel peut-être indépendamment appliqué par polarisation en conditions de voltampérométrie linéaire ou cyclique, en conditions potentiostatiques, potentiodynamiques, intensiostatiques, galvanostatiques, galvanodynamiques ou par chronoampérométrie simple ou pulsée. Il est avantageux que le potentiel soit appliqué par polarisation en conditions de voltampérométrie cyclique. Dans ce cas, le nombre de cycles sera compris notamment entre 1 et 1000 , en particulier entre 1 et 50, et, plus particulièrement, il sera proche de 10. Le potentiel est généralement appliqué au moins jusqu'à formation d'un film détectable par les moyens standards d'analyse de surface tels que ceux employés dans la partie expérimentale.

Selon un mode de réalisation particulier, le gel peut en outre comporter au moins une espèce organique monomérique, polymérisable par voie radicalaire différente du primaire d'adhésion, ci-après dénommée « monomère ». Elle est notamment choisie parmi les espèces monomériques susceptibles de polymériser en conditions radicalaires après amorçage par une entité chimique radicalaire. Typiquement, il s'agit de molécules comportant au moins une liaison de type éthylénique. Les monomères vinyliques, notamment les monomères décrits dans la demande de brevet FR 05 02516 ainsi que dans le brevet FR 03 11491, sont particulièrement concernés.

Parmi les monomères vinyliques, il est possible d'employer des monomères de formule (II) suivante : 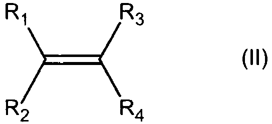 dans laquelle les groupes R₁ à R₄, identiques ou différents, représentent un atome monovalent non métallique tel qu'un atome d'halogène ou un atome d'hydrogène, ou un groupe chimique saturé ou insaturé, tel qu'une structure carbonée et notamment un groupe alkyle, aryle, un groupe -COOR₅ dans lequel R₅ représente un atome d'hydrogène ou un groupe alkyle en C₁-C₆, nitrile, carbonyle, amine ou amide.

Parmi les composés de formule (II) ci-dessus, on peut en particulier citer l'acide acrylique, l'acétate de vinyle, l'acrylonitrile, le méthacrylonitrile, le méthacrylate de méthyle, le méthacrylate d'éthyle, le méthacrylate de butyle, le méthacrylate de propyle, le méthacrylate d'hydroxyéthyle (HEMA), le méthacrylate d'hydroxypropyle, le méthacrylate de glycidyle ; les acrylamides et notamment les méthacrylamides d'amino-éthyle, propyle, butyle, pentyle et hexyle, les cyanoacrylates, les di-acrylates et di-méthacrylates, les tri-acrylates et tri-méthacrylates, les tétra-acrylates et tétra-méthacrylates (tels que le pentaérythritol tetraméthacrylate), le styrène et ses dérivés, le parachloro-styrène, le pentafluoro-styrène, la N-vinyl pyrrolidone, la 4-vinyl pyridine, la 2-vinyl pyridine, les halogénures de vinyle, d'acryloyle ou de méthacryloyle, le di-vinylbenzène (DVB), et plus généralement les agents réticulants vinylique ou à base d'acrylate, de méthacrylate, et de leurs dérivés.

Les monomères vinyliques préférés sont le méthacrylate de butyle et l'acide acrylique. La concentration en monomère dans le système est variable en fonction du désir de l'utilisateur. Il est préférable que celle-ci soit comprise entre 1 et 11 M et de préférence entre 1 et 5 M, typiquement 3,7 M.

Ce mode de réalisation permet de préparer un film organique à partir de deux types d'espèces chimiques distincts : les primaires d'adhésion, comme les sels d'aryle diazonium, et les monomères, comme les monomères vinyliques. Typiquement une couche d'amorce constituée d'un dérivé du primaire d'adhésion est formée et permet la formation d'un film polymérique dérivé essentiellement du monomère. Ainsi, le film organique dans le cadre de l'invention présente une séquence en unités « moléculaires » dans laquelle la première unité est constituée par un dérivé du primaire d'adhésion, les autres unités étant indifféremment dérivées des primaires d'adhésion et du monomère. Typiquement, un sel d'aryle diazonium qui est employé va former une couche de dérivé de primaire sur la surface traitée et sur cette couche va réagir l'espèce vinylique.

Par « dérivé du primaire d'adhésion », on entend, dans le cadre de la présente invention, une unité chimique résultant du primaire d'adhésion, après que ce dernier a réagi par greffage chimique radicalaire notamment avec la surface du support solide mis en oeuvre dans le cadre de la présente invention. Il est clair pour l'homme du métier que la fonction réactive vis-à-vis d'un autre radical après chimisorption du dérivé du primaire d'adhésion est différente de la fonction impliquée dans la liaison covalente avec la surface du support solide. Un film polymérique est dérivé « essentiellement » du monomère en ce sens qu'il peut éventuellement comprendre dans sa structure des entités chimiques dérivées de molécules de primaire d'adhésion.

Il est bien entendu possible d'employer simultanément plusieurs monomères de structure différente et notamment sous la forme d'un mélange de monomères vinyliques. Il est ainsi possible de former des films qui sont généralement qualifiés de copolymériques.

De manière avantageuse, les composés à propriétés colloïdales auront une réactivité négligeable avec le primaire d'adhésion et le monomère. Ainsi, par exemple, il n'est pas recommandé d'utiliser un gel de polyacrylamide lorsque l'acide acrylique est présent à titre d'espèce organique monomérique polymérisable par voie radicalaire. En effet, ce monomère peut réagir avec les fonctions amines de l'acrylamide avec formation de fonctions imides (-CO-NH-CO-). Dans ces conditions, afin d'assurer un meilleur rendement, un gel préparé à partir de polysaccharides, notamment l'agarose, sera alors préféré. L'homme de l'art est à même de déterminer les réactions parasites susceptibles de diminuer l'efficacité du procédé et la substitution d'un type de composé à propriétés colloïdales à un autre est à sa portée. Il peut être utile de tester différents composés à propriétés colloïdales pour un même type de primaire d'adhésion et d'éventuelles espèces organiques monomériques polymérisables par voie radicalaire différentes du primaire d'adhésion, afin de déterminer les composés à propriétés colloïdales les mieux adaptés.

Selon un mode de réalisation particulier de l'invention, il est recommandé que le gel contienne un tensioactif, notamment lorsque le monomère présente une solubilité dans le solvant protique inférieure à 10⁻² M. Une description précise des tensioactifs utilisables dans le cadre de l'invention est donnée dans les demandes de brevet FR 06 01804 et FR 06 08945. Les tensioactifs sont des molécules comportant une partie lipophile (apolaire) et une partie hydrophile (polaire). Parmi les tensioactifs utilisables selon l'invention, on peut notamment citer :
i) les tensioactifs anioniques dont la partie hydrophile est chargée négativement ; ils sont de préférence choisis parmi les composés de formule (III) suivante :

   R₆-A⁻ , Cat⁺ (III)

   dans laquelle :
   - R₆ représente un groupe aryle ou alkyle en C₁-C₂₀, de préférence en C₁-C₁₄, et plus préférentiellement en C₅-C₁₄,
   - A⁻ est anion choisi parmi les sulfonates, les sulfates, les phosphates, les carboxylates, les sulfosuccinates, etc.,
   - Cat ⁺ est un contre ion cationique, de préférence choisi parmi l'ion ammonium (NH₉⁺), les ammoniums quaternaires tels que tetrabutylammonium, et les cations alcalins tels que Na⁺, Li⁺ et K⁺ ;
ii) les tensioactifs cationiques dont la partie hydrophile est chargée positivement ; ils sont de préférence choisis parmi les ammoniums quaternaires de formule (IV) suivante :

   (R₇)₄-N⁺, An⁻ (IV)

   dans laquelle :
   - les groupes R₇, identiques ou différents, représentent une chaîne aliphatique, par exemple une chaîne alkyle en C₁-C₂₀, de préférence en C₁-C₁₄, et plus préférentiellement en C₅-C₁₄, ou aromatique,
   - An⁻ est un contre ion anionique choisi notamment parmi les dérivés du bore tels que le tetrafluoroborate ou les ions halogénures tels que F⁻, Br⁻, I⁻ ou Cl⁻ ;
iii) les tensioactifs zwittérioniques qui sont des composés neutres possédant des charges électriques formelles d'une unité et de signe opposé ; ils sont de préférence choisis parmi les composés de formule (V) suivante :

   Z⁻-R₈-Z⁺ (V)

   dans laquelle :
   - R₈ représente une chaîne alkyle en C₁-C₂₀, de préférence en C₁-C₁₄, et plus préférentiellement en C₅-C₁₄,
   - Z⁻ représente une fonction chargée négativement portée par R₈, de préférence correspondant à un sulfate ou un carboxylate,
   - Z⁺ représente une fonction chargée positivement, de préférence un ammonium ;
iv) les tensioactifs amphotères qui sont des composés se comportant à la fois comme un acide ou comme une base selon le milieu dans lequel ils sont placés ; ces composés peuvent avoir une nature zwittérionique, les acides aminés sont un exemple particulier de cette famille,
v) les tensioactifs neutres (non-ioniques) : les propriétés tensioactives, notamment l'hydrophilie, sont apportées par des groupements fonctionnels non chargés tels qu'un alcool, un éther, un ester ou encore une amide, contenant des hétéroatomes tels que l'azote ou l'oxygène ; en raison de la faible contribution hydrophile de ces fonctions, les composés tensioactifs non ioniques sont le plus souvent polyfonctionnels.

Les tensioactifs chargés peuvent bien entendu porter plusieurs charges.

Parmi les différentes significations du groupement aryle du groupe R₆ des composés de formule (III) ci-dessus, on peut notamment citer le cycle phényle, substitué ou non, et parmi les différentes significations du groupement alkyle R₆, les chaînes alkyle en C₁-C₂₀, de préférence en C₁-C₁₄, et plus préférentiellement en C₅-C₁₄.

A titre de composé de formule (III), on préfère utiliser le paratoluènesulfonate de tetraéthylammonium, le dodécylsulfate de sodium (SDS), le palmitate de sodium, le stéarate de sodium, le myristate de sodium, le di(2-éthylhexyl) sulfosuccinate de sodium, le méthylbenzène sulfonate et l'éthylbenzène sulfonate.

Parmi les différentes significations des groupes R₇ des ammoniums quaternaires de formule (IV) ci-dessus, on peut notamment citer les groupes méthyle, éthyle, propyle, butyle et tetradécyle.

A titre de composé de formule (IV), on préfère utiliser le bromure de tetradécyltriméthyle ammonium (TTAB), les halogénures d'alkylpyridinium portant une chaîne aliphatique en C₁-C₁₈ et les halogénures d'alkylammonium.

A titre de tensioactif zwittérionique, on peut notamment citer le N,N-diméthyldodécylammoniumbutanate de sodium, le diméthyldodécylammonium propanate de sodium et les acides aminés.

A titre de tensioactif amphotère, on peut notamment citer le lauroamphodiacétate de disodium, les bétaïnes comme l'alkylamidopropylbétaïne ou la laurylhydroxysulfobétaïne.

A titre de tensioactif non-ioniques, on peut en particulier citer les polyéthers comme les tensioactifs polyéthoxylés tels que par exemple le lauryléther de polyéthylèneglycol (POE23 ou Brij® 35), les polyols (tensioactifs dérivés de sucres) en particulier les alkylates de glucose tels que, par exemple, l'hexanate de glucose.

Les tensioactifs utilisables selon l'invention sont également des émulsifiants, i.e., lorsqu'il sont présents en faibles quantités, ils facilitent la formation d'une émulsion ou augmentent la stabilité colloïdale en faisant diminuer la vitesse d'agrégation ou la vitesse de coalescence ou les deux. Des mesures de l'une ou l'autre des vitesses selon les techniques connues par l'homme du métier comme la mesure de la taille des gouttes par diffusion de la lumière pourront permettre de déterminer le meilleur émulsifiant parmi les tensioactifs recommandés dans chacun des cas à partir d'une solution du utilisé dans le gel.

Parmi les tensioactifs préférés selon l'invention on peut citer les tensioactifs anioniques tels que les sulfonates, les ammoniums quaternaires et les tensioactifs non ioniques tels que les polyoxyéthylènes.

L'intérêt du tensioactif réside dans sa capacité à former des micelles dans le solvant qui favorisent la croissance de macroradicaux, en les isolants du milieu extérieur, assurant ensuite la croissance du film. A ce titre, on peut notamment citer le dodécyle sulfate de sodium (SDS) et l'éther polyglycolique de lauryle (Brij 35^{®}). La quantité minimum de tensioactif nécessaire pour solubiliser un composé dans une solution peut être facilement déterminée en échantillonnant des solutions de composition identique mais de concentration variable en tensioactif et en observant l'effet produit par le tensioactif. De manière générale, il est recommandé que la concentration en tensioactif dans le solvant du gel soit telle que la concentration micellaire critique (CMC) en monomère soit atteinte. La CMC d'un tensioactif peut être déterminée par les méthodes connues de l'homme du métier, par exemple par des mesures de tensions de surface.

La concentration en tensioactif au sein de la solution de solvant protique est typiquement au moins égale à la CMC et généralement comprise entre 0,5 mM et 5 M environ, de préférence entre 0,1 mM et 150 mM environ. La concentration recommandée en tensioactif est usuellement de 5 mM. Typiquement la quantité de tensioactif sera comprise entre 1/20 et 1/150 de celle du monomère et préférentiellement elle sera proche de 1/100.

Le gel peut comporter au moins un électrolyte pouvant notamment être choisi parmi les sels d'ammonium quaternaire tels que les perchlorates, les tosylates, les tetrafluoroborates, les hexafluorophosphates, les halogénures d'ammonium quaternaire, le nitrate de sodium et le chlorure de sodium. Il est recommandé d'employer un électrolyte lorsque le gel n'est pas suffisamment conducteur pour permettre le greffage efficient. Il est possible d'effectuer des mesures préalables afin de déterminer les bénéfices liés à l'électrolyte selon les composés présents dans le gel. Lorsque le solvant employé est un solvant organique, il est recommandé d'employer un électrolyte.

Parmi ces sels d'ammonium quaternaire on peut en particulier citer à titre d'exemple le perchlorate de tetraéthylammonium (TEAP), le perchlorate de tetrabutylammonium (TBAP), le perchlorate de tetrapropylammonium (TPAP), le perchlorate de benzyltriméthylammonium (BTMAP), le tétrafluoroborate de tétraéthylammonium.

Le procédé peut en outre comporter une étape de préparation du système colloïdal. Ainsi, selon un mode de réalisation particulier de l'invention, le procédé comporte les étapes supplémentaires suivantes :
- préparation d'un gel à partir d'au moins un composé à propriétés colloïdales et d'un solvant protique,
- diffusion d'au moins un primaire d'adhésion, et éventuellement d'au moins un monomère, dans le gel.

L'étape de préparation du système colloïdal est fonction des composés employés et est connue dans le domaine correspondant. Elle est généralement effectuée par la mise en solution des composés puis à la formation du système. Le système peut se former spontanément. S'agissant des composés chimiques, tels que les polysaccharides, il est généralement nécessaire de procéder à un chauffage puis à un refroidissement de la solution constituée du solvant et des composés. Le chauffage assure la dispersion des molécules dans la solution et permet de rompre une partie des liaisons faibles existant entre les différentes molécules qui peuvent alors se réorganiser pour former un réseau. Le système colloïdal apparait lors du refroidissement de la solution. Pour ce qui est, par exemple, des gels de polyacrylamide, la formation du gel nécessite l'utilisation d'un agent de réticulation et d'acrylamide.

L'étape de diffusion est généralement effectuée par mise en contact d'une solution du solvant protique comprenant le primaire d'adhésion, et l'éventuel monomère, avec le gel préalablement préparé. Le solvant employé pour la préparation du gel peut être différent du solvant protique, il est toutefois recommandé qu'il soit également protique, avantageusement il s'agira du même solvant. La mise au contact correspond typiquement à l'immersion du gel dans la solution.

Le temps nécessaire pour effectuer la diffusion dépend bien entendu du système qui est mis en oeuvre, tant son volume que les composés utilisés, et la détermination des modalités optimales sont accessibles à l'homme du métier par de simples essais expérimentaux. A ce titre, il est recommandé de se reporter aux exemples ci-après qui illustrent cet aspect de l'invention. Pour un système colloïdal élaboré à partir de polysaccharide, comme l'agarose, en employant un solvant majoritairement aqueux, et notamment de l'eau pure, avec 0,1 à 0,5 g de composés à propriétés colloïdales dans un rapport composés /solvant compris entre 1,5 et 2 % (poids de composé /volume de solvant), il est recommandé une mise en contact comprise entre 30 min et 4h.

Typiquement la solution qui est mise en contact avec le gel possèdera une concentration en primaire d'adhésion et en éventuel monomère égale à celle à laquelle l'utilisateur souhaite effectuer le greffage, de telles valeurs sont exposées plus haut.

Selon un autre mode de réalisation particulier, le gel peut être préparé en une étape unique. Pour cela, il est souhaitable d'ajouter directement le primaire d'adhésion, et l'éventuel monomère, lors de la préparation du système colloïdal. Le procédé comportera alors une étape de préparation d'un gel à partir d'au moins un composé à propriétés colloïdales, d'un solvant protique, d'au moins un primaire d'adhésion, et éventuellement d'au moins un monomère. Ainsi, par exemple, il suffit d'intégrer le primaire d'adhésion, et l'éventuel monomère, à une solution de polysaccharide dans un solvant protique puis de préparer le gel pour obtenir le gel décrit plus haut permettant de former un film organique.

Lors de la préparation du gel, qu'elle soit faite en une ou deux étapes, il est bien entendu possible d'ajouter un ou plusieurs autres éléments tels que des tensioactifs ; un acide, typiquement pour stabiliser les sels de diazonium ; des électrolytes qui pourraient être employés dans la solution électrochimique ainsi que décrit plus haut ; des agents de réticulation. De manière avantageuse, le système colloïdal sera préparé sous atmosphère inerte. De préférence, les solutions employées subiront un barbotage à l'aide d'un gaz inerte comme l'argon, ceci permettant généralement d'augmenter l'efficacité de la formation du film.

Le pH du système colloïdal peut varier et il est utile de le fixer lors de sa préparation. L'homme du métier sera bien entendu à même de déterminer les composés à propriétés colloïdales les mieux adaptés, *i.e.* qui ne sont pas altérés dans les conditions choisies, selon le pH qu'il aura choisi.

Il est avantageux de donner au système colloïdal une morphologie choisie, et de préférence adaptée à la surface à laquelle il est mis en contact. La morphologie du système est souvent élaborée lors de la préparation du système colloïdal. Il est, pour cela, possible d'employer des moules particuliers correspondant à la forme que l'utilisateur souhaite donner au système. Il est également possible de modeler, après sa préparation, le système colloïdal obtenu et ce, à l'aide d'outils adaptés tels que des lames. Le système colloïdal peut ainsi présenter une surface de contact de forme originale et peut, par exemple, correspondre à des caractères alphanumériques ou des idéogrammes. La surface de contact peut être continue ou discontinue, la morphologie déterminant la localisation des contacts potentiels. Ainsi le système peut présenter une surface de contact avec la surface sur laquelle le film doit être formé, discontinue à des échelles variables et aussi bien microscopique que nanométrique. De manière avantageuse, la surface de contact présentera la topologie d'un circuit électronique.

Le procédé peut être réalisé dans une large gamme de températures. Il est toutefois recommandé de ne pas dépasser la température correspondant au point de gel et de ne pas descendre sous la température de solidification du solvant employé. Le procédé sera généralement réalisé à température ambiante, soit environ 20-30°C.

L'invention concerne également un gel comprenant un solvant protique, au moins un composé à propriétés colloïdales, au moins un primaire d'adhésion et éventuellement au moins un monomère, tels qu'ils ont été définis ci-dessus. Le gel peut également comporter une ou plusieurs espèces supplémentaires, par exemple des électrolytes, des tensioactifs, des agents de réticulation ainsi que cela ressort de l'exposé qui a été fait. Le gel comportera avantageusement les espèces décrites pour la réalisation du procédé, il pourra, par exemple, comporter plusieurs types de primaire d'adhésion et également plusieurs types monomères.

L'invention concerne en outre l'utilisation d'un gel tel que précédemment défini comme cellule électrochimique pour réaliser l'électrogreffage d'un film organique sur une surface conductrice ou semi-conductrice de l'électricité ou pour réaliser un greffage localisé.

L'invention concerne également un kit pour la formation d'un film organique sur une surface conductrice ou semi-conductrice de l'électricité, un tel kit est adapté à la réalisation du procédé exposé ci-dessus. Un tel kit comprend notamment un gel tel que défini ci-dessus, le gel étant généralement structuré par au moins un composé à propriétés colloïdales et un solvant protique, comme précédemment décrit. Il comprend également au moins un primaire d'adhésion et éventuellement au moins un monomère tels que précédemment définis. Des espèces supplémentaires, par exemple des électrolytes, des agents de réticulation ou des tensioactifs, ainsi que cela ressort de l'exposé qui a été fait peuvent bien entendu être présentes dans le kit.

Selon un mode de réalisation particulier, le solvant, le primaire d'adhésion et le monomère sont contenus dans le gel. Selon un autre mode de réalisation, le gel et le primaire d'adhésion, avec l'éventuel monomère, solvaté par le solvant protique sont physiquement séparés. Une telle séparation peut se traduit généralement sous forme de conditionnements séparés. Il est possible dans ce cas que le gel contienne un solvant protique différent du solvant protique dans lequel le primaire d'adhésion, et l'éventuel monomère, sont dissous. S'agissant de l'application du procédé de formation de film, on se réfèrera utilement à ce qui a été décrit plus haut. Typiquement le kit de formation comprendra un gel, constitué d'un solvant protique et d'au moins un composé à propriétés colloïdales, physiquement séparé d'une solution d'au moins un primaire d'adhésion, avec éventuellement au moins un monomère, dans un solvant protique identique ou différent. Il est clair que solvant protique, composé à propriétés colloïdales, primaire d'adhésion et monomère sont tels que précédemment définis.

Le kit peut en outre comporter des moyens électriques susceptibles de générer un potentiel. Typiquement, il peut s'agir d'une pile équipée d'un variateur de tension qui permettra de générer un potentiel jusqu'à une valeur de 2V.

L'invention permet notamment de préparer, par greffage, des films organiques, tels que des revêtements de polymères, sur une surface, par exemple métallique, quelle que soit sa taille, en position aussi bien horizontale que verticale et en absence de bain et plus particulièrement en absence de récipient comme une cuve d'électrolyse. En outre, le procédé peut être employé avec des solvants non polluants comme l'eau. Les films obtenus sont de constitutions variables et leurs propriétés peuvent être modulées selon la nature du ou des primaires d'adhésion et celle des éventuels monomères qui sont employés.

Elle permet en outre de réaliser des motifs ou d'effectuer un greffage localisé sur une surface à une échelle variant du mètre, comme la carrosserie d'un véhicule, au nanomètre, comme les circuits électroniques (nanoimpression), avec une grande facilité.

Par ailleurs, le gel décrit dans l'invention est réutilisable. Il est ainsi possible de le « recharger » notamment en primaire d'adhésion, et en l'éventuel monomère, par diffusion ainsi que cela a été exposé plus haut. Ainsi, de manière économique, un gel dont la morphologie est adaptée à une surface peut être employé un grand nombre de fois puisqu'il suffit de le charger lorsqu'il ne contient plus suffisamment de primaire d'adhésion, et d'éventuels monomères. Un tel gel est particulièrement intéressant pour revêtir une série de surfaces identiques en film organique avec une grande reproductibilité.

L'invention sera mieux comprise à la lecture des figures et exemples qui suivent. Ceux-ci n'ont pas pour but de limiter l'invention dans ses applications, il ne s'agit que d'illustrer ici les possibilités offertes par ce nouveau développement de la technique.

### BRÈVE DESCRIPTION DES DESSINS

La figure 1 est une représentation schématique du montage électrochimique mettant en oeuvre l'invention.
La figure 2 présente un voltampérogramme d'un gel aqueux, contenant du 4-NitroBenzene Diazonium Tétrafluoroborate (NBDT), au contact d'une surface d'or (Figure 2a) et un spectre infra rouge à transformée de Fourier (FTIR) de la surface de la lame d'or après électrolyse en présence du gel aqueux d'agarose contenant du NBDT (Figure 2b).
La figure 3 présente la variation de l'épaisseur du film greffé (estimée à partir du pourcentage de transmittance déterminée par FTIR) en fonction de la concentration en NBDT.
La figure 4 présente un voltampérogramme d'un gel aqueux, contenant de l'acide acrylique et du NBDT, au contact d'une surface d'or (Figure 4a) et un spectre FTIR de la surface de la lame d'or après électrolyse en présence d'un gel aqueux d'agarose contenant de l'acide acrylique et du NBDT (Figure 4b).
La figure 5 présente un voltampérogramme d'un gel aqueux d'acrylamide, contenant de l'HydroxyEthylMethAcrylate (HEMA) et du NBDT, au contact d'une surface d'or (Figure 5a) et un spectre FTIR de la surface de la lame d'or après électrolyse de la lame en présence d'un gel d'acrylamide contenant de l'HEMA et du NBDT (Figure 5b).
La figure 6 présente les spectres FTIR obtenus pour différentes valeurs du potentiel pour un même gel.
La figure 7 présente les spectres FTIR obtenus pour différentes valeurs de concentration en monomère pour un même gel.
La figure 8 présente un voltampérogramme d'un gel d'agarose, contenant de l'acétonitrile et du NBDT, au contact d'une surface d'or (Figure 8a) et un spectre FTIR de la surface de la lame d'or après électrolyse en présence d'un gel d'agarose contenant de l'acétonitrile et du NBDT (Figure 8b).
La figure 9 présente un voltampérogramme d'un gel d'agarose, contenant de l'acétonitrile, du ButylMethAcrylate (BuMA) et du NBDT, au contact d'une surface d'or (Figure 9a) et un spectre FTIR de la surface de la lame d'or après électrolyse en présence d'un gel d'agarose contenant de l'acétonitrile, du BuMA et du NBDT (Figure 9b).
La figure 10 présente un voltampérogramme d'un gel d'agarose aqueux, contenant du NBDT, du BuMA et un tensioactif, au contact d'une surface d'or (Figure 10a) et un spectre FTIR de la surface de la lame d'or après électrolyse en présence d'un gel d'agarose aqueux contenant du NBDT, du BuMa et un tensioactif avant et après traitement aux ultrasons (+ US) (Figure 10b).
La figure 11 présente un voltampérogramme d'un gel d'agarose aqueux, contenant du NBDT, de l'Acetate de Vinyle (AV) et un tensioactif, au contact d'une surface d'or (Figure 11a) et un spectre FTIR de la surface de la lame d'or après électrolyse en présence d'un gel d'agarose aqueux contenant du NBDT, de l'AV et un tensioactif après traitement aux ultrasons (Figure 11b).
La figure 12 présente un voltampérogramme d'un gel d'agarose aqueux, contenant du NBDT, du BuMA et un tensioactif neutre, au contact d'une surface d'or (Figure 12a) et un spectre FTIR de la surface de la lame d'or après électrolyse en présence d'un gel d'agarose aqueux contenant du NBDT, du BuMA et un tensioactif neutre après traitement aux ultrasons (Figure 12b).
La figure 13 est une représentation schématique des différentes étapes pour l'obtention d'une croix greffée sur lame d'or (bras de 10 mm et épaisseur de 1mm).
La figure 14 présente les spectres FTIR obtenus après utilisation d'un gel d'agarose mis au contact de la solution électrochimique une seule fois avant la première série de 10 cycles en voltampérométrie.

### EXPOSÉ DÉTAILLÉ DE MODES DE RÉALISATION PARTICULIERS

Les exemples exposés ci-après ont été réalisés en utilisant un système colloïdal élaboré à moindre coût à partir d'un polysaccharide disponible dans le commerce. L'eau a été employée comme solvant dans la mesure où elle est adaptée à ce type de système et qu'elle représente un solvant idéal dans le cadre d'une chimie non polluante. Alternativement le procédé a été également appliqué en présence de solvant organique.

A titre de surface d'intérêt, il a été décidé d'employer une surface d'or notamment car il s'agit d'un substrat inerte qu'il est aisé de stocker dans des conditions d'atmosphère standard sans observer d'altération. La surface d'or a été préparée par évaporation pour former une couche mince d'or polymicrocristalline (environ 150 nm d'épaisseur) avec une sous couche de chrome de 5 nm sur un support de verre

Les surfaces d'intérêt obtenues selon le procédé présentent des films d'une grande homogénéité et d'une grande qualité qui résistent à un nettoyage dans différents solvants organiques tels que l'acétone, le DMF ou l'acétonitrile sous ultrasons.

### EXEMPLE 1 - PREPARATION DU SYSTEME COLLOÏDAL AQUEUX

### Préparation d'un gel simple

### Gel d'agarose

L'agarose est un polymère (polysaccharide) du galactose. A faible concentration dans l'eau (1 à 3% poids/volume), il forme des gels solides très poreux. Sa gélification à basse température est due à la formation d'une multitude de liaisons hydrogène entre les molécules de galactose.

Le gel a été préparé selon une procédure standard. Dans un bécher muni d'un barreau aimanté, ont été versés 20 ml d'eau désionisée et 0,3 g d'agarose bas point de fusion (86 ± 2°C) avec une teneur en sulfate ≤ 0,12 %. Le bécher, recouvert d'un papier de parafilm (afin d'éviter l'évaporation de l'eau et maintenir la concentration en agarose constante), a ensuite été plongé dans un bain-marie chauffé. Le gel préparé a une concentration de 1,5 % poids/volume par rapport au solvant.

La solution est restée trouble jusqu'à 78°C, puis au-delà de cette température elle est devenue limpide. Le chauffage a été arrêté à environ 93°C. Quand la température du bain-marie atteint 65°C, la solution contenue dans le bécher a été transvasée dans un bécher de 50 ml, préalablement tiédi par un décapeur thermique pour ralentir la formation du gel. Le gel s'est formé alors que la température diminuait. Le gel été obtenu a une force ≥3200g/cm², selon les spécifications du fournisseur.

Le gel (1) a ensuite été plongé pendant 3 heures dans une solution électrochimique fraîchement préparée puis déposé sur du papier absorbant, quelques secondes, et placé sur une surface d'or qui a par la suite été utilisée comme cathode (2) dans le cadre du procédé.

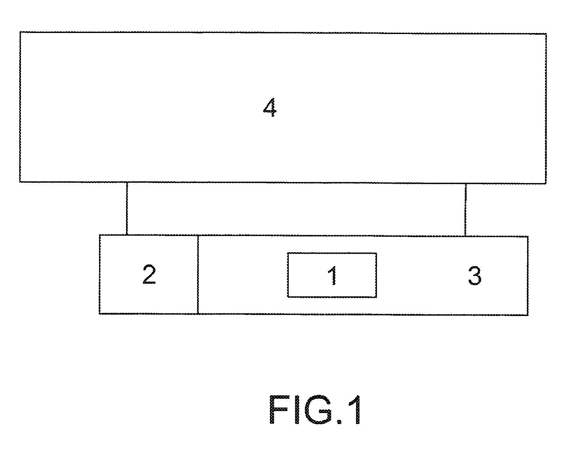

Afin de mettre en oeuvre le procédé, il a été choisi d'employer une anode (3) étant constituée d'une lame de graphite, l'électrode de référence a été court-circuitée sur l'anode. Le potentiel indiqué (sur le potentiostat (4)) correspond à une variation de potentiel entre les deux électrodes et non au potentiel réel de la cathode. Le montage est représenté sur la figure 1.

### Gel de polyacrylamide

La synthèse d'un gel de polyacrylamide poreux est simple (Tamagawa H. et al., « Pores and diffusion characteristics of porous gels », Polymer, 2000, 41, 7201). Dans un bécher ont été introduits 50g d'eau désionisée, l'acrylamide (le monomère, 5,78g (1,6M)), le N,N-méthylènebisacrylamide (le réticulant, 0, 0755g (9,8.10⁻³M)), le N,N,N',N'-tétraméthyléthylènediamine (l'accélérateur, 0,0308g (5,3.10⁻³M)) et le persulfate d'ammonium (l' amorceur, 0,080g (7.10⁻³M)). Ce mélange a alors été chauffé à 80°C dans un bain d'eau pendant 30 minutes. Rapidement le gel se forme.

Une fraction de gel synthétisé selon le protocole décrit précédemment (rectangle de 1 cm sur 2 et 1cm d'épaisseur) est plongée dans une solution électrochimique pendant 30 minutes. Le procédé est mis en oeuvre comme indiqué pour le gel d'agarose.

### Synthèse d'un gel contenant directement les espèces réactives

Dans un bécher muni d'un barreau aimanté, ont été versés 10ml d'eau désionisée, 0,15g d'agarose à bas point de fusion (voir ci-dessus) et 3ml (2M) d'HydroxyEthylMethacrylate (HEMA). Le bécher, recouvert d'un papier de parafilm, a été plongé dans un bain marie chauffé. Comme dans l'exemple précédent, le chauffage a été arrêté à 93°C. Quand la température du bain marie a atteint 65°C, la solution a alors été transvasée dans un bécher de 50ml tiédi à l'aide d'un décapeur thermique. Le gel a ensuite été plongé pendant 30 minutes dans la solution aqueuse renfermant 65 mg (2,7.10⁻² M) de Tétrafluoroborate de 4-NitroPhényl Diazonium (NBDT) et une goutte H₂SO₄ en présence d'un barbotage d'argon.

### EXEMPLE 2 - FILM POLYMERIQUE A PARTIR D'UN PRIMAIRE D'ADHESION

Le gel simple d'agarose tel que préparé dans l'exemple 1 a été plongé dans une solution aqueuse de NBDT.

La solution électrochimique a été réalisée en dissolvant 75 mg (3.10⁻² M) de NBDT dans 10 ml d'eau sous agitation. Afin de garantir la stabilité de ce sel le pH de la solution a été fixé à environ 2 par adjonction d'acide sulfurique.

Pour l'étude du comportement électrochimique du gel contenant du NBDT dans la solution électrochimique, 10 balayages de + 0,04 V à - 0,6 V avec une vitesse de balayage de 20mV/s ont été réalisés.

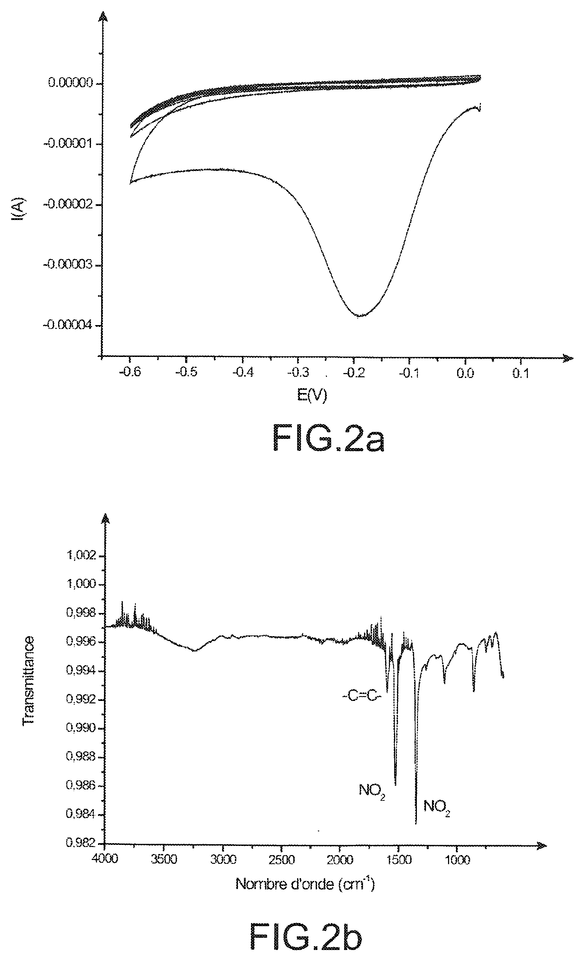

Le voltampérogramme enregistré est représenté sur la figure 2a et le spectre infra rouge à transformée de Fourrier (FTIR) du film greffé est représenté sur la figure 2b. La réduction des groupements N₂⁺ est observée à - 0,187 V lors du premier balayage de potentiel (figure 2a). Sur le spectre du film de polynitrophénylène greffé sur la lame d'or après lavage dans l'eau aux ultrasons pendant 2 minutes (figure 2b), les bandes NO₂ caractéristiques du NBDT sont nettement visibles à 1524 et 1350 cm⁻¹.

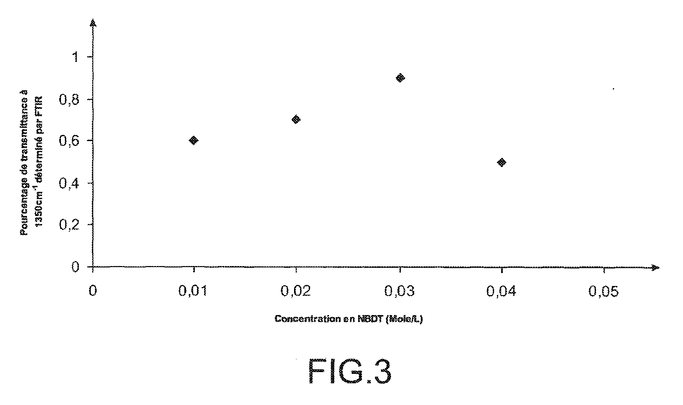

L'optimisation de la concentration en sel de diazonium, pour l'obtention de films d'épaisseur variable, a été réalisée et différentes concentrations ont été étudiées. La courbe présentée à la figure 3 représente la relation entre l'épaisseur du film et la concentration en diazonium. L'épaisseur est estimée à partir du pourcentage de transmittance déterminée par FTIR pour la bande d'absorption infrarouge du groupement nitro à 1350 cm⁻¹ en fonction de la concentration en NBDT. L'épaisseur la plus importante a été déterminée ici pour une concentration en sel de diazonium d'environ 3.10⁻² M.

L'utilisation d'un monomère d'une espèce unique comme le sel de diazonium tel que présenté à l'exemple 2 conduit à la formation d'un film de polynitrophenylène ne contenant qu'une seule espèce de monomère électrogreffé.

### EXEMPLE 3 - FILM POLYMERIQUE A PARTIR D'UN PRIMAIRE D'ADHESION ET D'UN MONOMERE

### Acide acrylique en présence du sel de diazonium avec un gel d'agarose

Une nouvelle solution électrochimique a été réalisée en dissolvant 73 mg (2,3.10⁻² M) de NBDT dans 10 ml d'eau sous agitation, puis 3,45ml (3,7 M) d'acide acrylique ont été ajoutés. Un gel d'agarose, obtenu selon les modalités présentées à l'exemple 1 a été plongé dans cette solution pendant 30 minutes, en présence d'un barbotage d'argon.

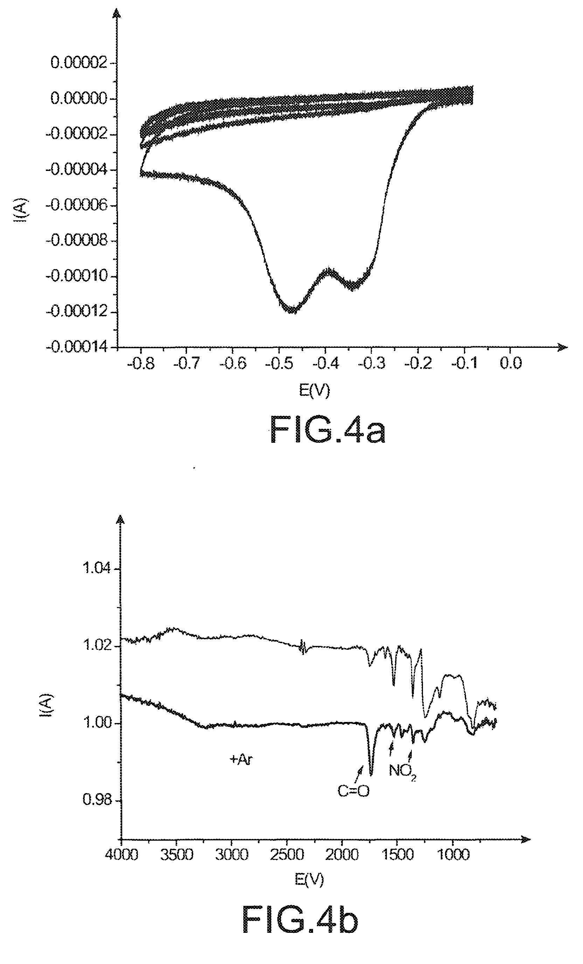

Pour l'étude électrochimique, 10 balayages de - 0,1 V à - 1,8 V avec une vitesse de balayage de 10mV/s ont été réalisés. Le voltamogramme obtenu est représenté sur la figure 4a et le spectre FTIR, réalisé après avoir soumis la lame aux ultrasons pendant 2 minutes dans l'eau, est rapporté sur la figure 4b.

La figure 4a montre que la réduction des groupements N₂⁺ s'effectue à - 0,7 V lors du premier balayage de potentiel. L'analyse FTIR (figure 4b), du spectre réalisé après avoir soumis la lame aux ultrasons pendant 2 minutes dans l'eau, révèle la présence de polynitrophénylène (bande des NO₂ à 1524 et 1350 cm⁻¹) et d'acide polyacrylique (bande CO des groupements carbonyles à 1725 cm⁻¹) sur la lame.

### Hydroxyméthacrylate (HEMA) en présence du sel de diazonium avec un gel de polyacrylamide

Une fraction de gel de polyacrylamide synthétisé selon le protocole décrit précédemment (rectangle de 1cm sur 2 et 1cm d'épaisseur) a été plongée dans une solution électrochimique pendant 30 minutes. La solution renferme 20 ml d'eau désionisée, 6,3 ml (2 M) d'HEMA, 0,130g de NBDT (0,02 M) et une goutte d'H₂SO₄ en présence d'un barbotage d'argon.

Pour l'étude électrochimique, 10 balayages de -0,1V à -1,8V avec une vitesse de balayage de 10mv/s ont été réalisés.

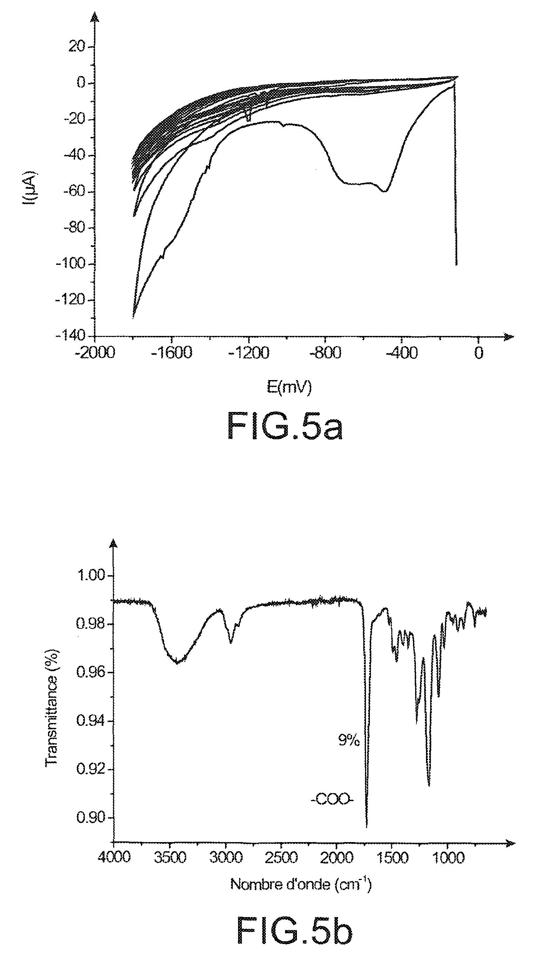

Le voltampérogramme obtenu est représenté sur la figure 5a et le spectre FTIR, réalisé après avoir soumis la lame aux ultrasons dans l'eau, est reporté sur la figure 5b.

Sur la figure 5a on constate que la réduction des groupements N₂⁺ s'effectue à - 0,47 V et - 0,66 V lors du premier cycle. L'analyse de la lame par FTIR (figure 5b) montre la présence de la bande ester -COO- caractéristique du polyHEMA à 1729 cm⁻¹.

Ce gel d'acrylamide permet, comme le gel d'agarose, de greffer un film organique polymérique sur un substrat métallique en milieu aqueux.

### EXEMPLE 4 - CONTROLE DE L'EPAISSEUR

Afin de montrer qu'il est possible d'obtenir des films d'épaisseur variable en modifiant les conditions expérimentales, deux paramètres ont été étudiés : la valeur du potentiel final et la concentration en monomère. L'incidence de leurs variations sur l'épaisseur du film a été mise en évidence en observant les changements de la valeur du pourcentage de transmittance de la bande carbonyle à 1725 cm⁻¹ de l'acide polyacrylique greffé. Cette valeur rend compte de l'épaisseur de film greffé, une valeur élevée correspond à un film épais.

Le modèle de film (acide acrylique et sel de diazonium), employé à l'exemple 3, a été utilisé pour illustrer cet exemple.

### Influence du potentiel final

Un gel d'agarose, tel que préparé à l'exemple 1, a été plongé dans une solution électrochimique comprenant 2.10⁻¹ M de Et₄NBF₄, 3,7 M d'acide et 3.10⁻² M de NBDT avec barbotage d'argon durant environ 3h.

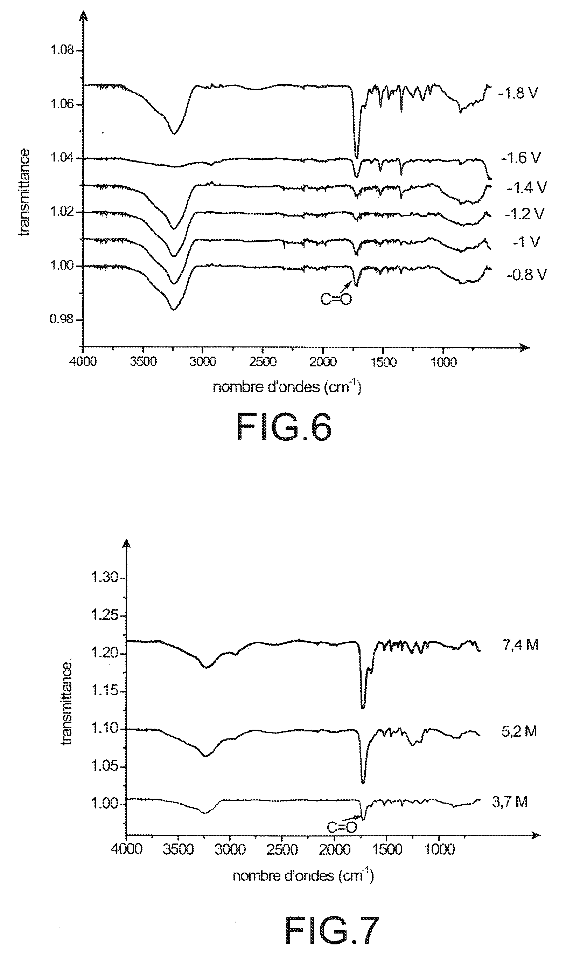

Des cycles de 10 balayages de + 0,084 V jusqu'à différentes valeurs de potentiel final, de - 0,8 V à - 1,8 V, ont été réalisés avec une vitesse de balayage de 10 mV/s sur des échantillons identiques. Les spectres FTIR obtenus, après lavage dans l'eau aux ultrasons pendant 2 minutes, sont rapportés sur la figure 6.

Le pourcentage de transmittance, pour la bande CO à 1725 cm⁻¹ des groupements carbonyles de l'acide polyacrylique greffé, le plus élevé correspond au potentiel final de - 1,8 V. C'est en travaillant jusqu'à ce potentiel que le film d'acide polyacrylique le plus épais est obtenu. L'élargissement de la gamme de potentiel entraine la réduction des protons H⁺, ce qui entraîne la libération de radicaux H^{•} dans le gel. Ces derniers, tout comme les radicaux de NBDT, amorcent la polymérisation, ce qui augmente le rendement en acide polyacrylique greffé sur la lame.

### Influence de la concentration en monomère

Après avoir déterminé à - 1,8 V la valeur du potentiel final favorable à l'augmentation du rendement en acide polyacrylique greffé sur la lame, l'influence de la concentration en acide acrylique dans la solution a été étudiée.

Trois solutions aqueuses contenant chacune respectivement 3,5 M, 5,2 M et 7,4 M d'acide acrylique, avec des concentrations de 2.10⁻¹ M en Et₄NBF₄ et 3.10⁻² M en NBDT pour les autres composants, ont été préparées. Dans chacune d'elles un gel, tel que préparé à l'exemple 1, a été immergé pendant 3 heures en présence d'un barbotage d'argon.

Des cycles de 10 balayages de + 0,084 V à - 1,8 V avec une vitesse de balayage de 10 mV/s ont été réalisés sur chacun des échantillons préparés.

Les spectres enregistrés en FTIR, après lavage dans l'eau aux ultrasons pendant 2 minutes, sont donnés sur la figure 7.

Le pourcentage de transmittance, pour la bande CO à 1725 cm⁻¹ des groupements carbonyles de l'acide polyacrylique greffé, le plus élevé correspond à la concentration de 7,4 M d'acide acrylique dans la solution.

### Influence du dégazage de l'eau avant réalisation du gel

Le gel a été préparé sous flux d'argon à partir d'eau desionisée, qui a été préalablement dégazée, par barbotage d'argon, pendant 3h, selon le protocole de l'exemple 1. L'étape de diffusion de la solution électrochimique dans le gel et la préparation du film (acide acrylique et sel de diazonium) est semblable à celle qui est présentée à l'exemple 3. L'analyse FTIR du film greffé après avoir soumis la lame d'or aux ultrasons dans l'eau désionisée montre qu'un film plus épais qu'en absence de dégazage est obtenu, en effet le pourcentage de transmittance de la bande ester de l'acide polyacrylique est de 10% plus important.

### EXEMPLE 5 - PREPARATION D'UN SYSTEME COLLOÏDAL ORGANIQUE

Typiquement, en électrochimie les réactions d'électrogreffage sont réalisées dans des cellules électrochimiques avec des solvants aprotiques tels que l'acétonitrile ou le DMF.

### Film polymérique à partir du primaire seul

Un gel, préparé selon le protocole de l'exemple 1, a été immergé, sous barbotage d'argon pendant environ 3 heures, dans une solution de 75 mg (3.10⁻² M) de NBDT et 440 mg (2.10⁻¹ M) de Et₄NBF₄ dans 10 ml d'acétonitrile.

L'étude électrochimique a été réalisée par voltampérométrie cyclique en pratiquant 10 balayages de - 0,01 V à - 0,8 V à la vitesse de 10 mV/s.

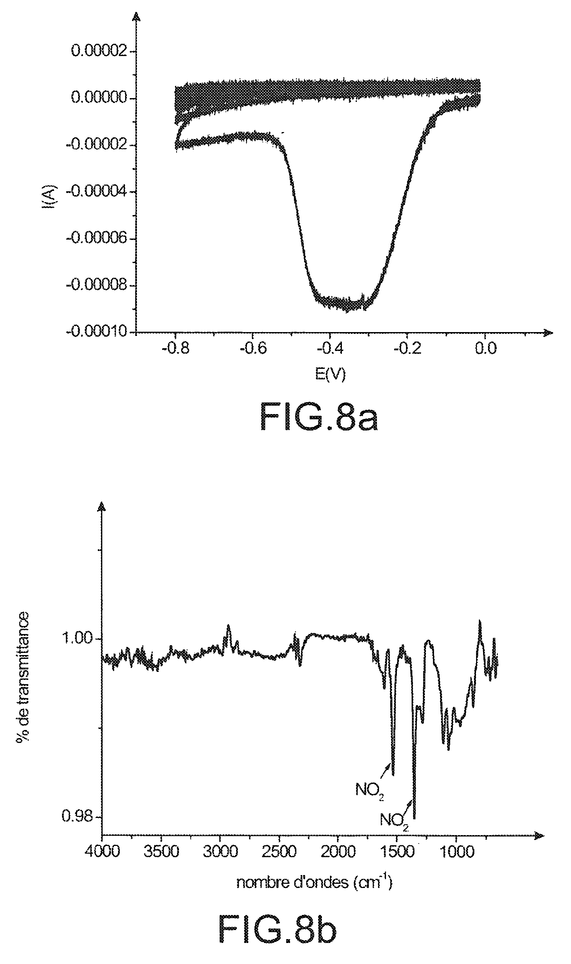

Le voltampérogramme enregistré est présenté sur la figure 8a et le spectre FTIR du film greffé, réalisé après lavage de la lame dans l'acétonitrile aux ultrasons pendant 2 minutes, est représenté sur la figure 8b.

La réduction des groupements N₂⁺ est constatée à - 0,35 V lors du premier cycle (figure 8a). L'analyse de la lame par FTIR (figure 8b) montre la présence des bandes NO₂ caractéristiques du polynitrophénylène à 1350 et 1528 cm⁻¹.

Ces résultats rendent compte de la possibilité d'utiliser le gel d'agarose comme cellule électrochimique en milieu organique.

### Film polymérique à partir du primaire et d'une espèce monomérique

Les films présentés ci-dessous ont été préparés à partir d'un sel de diazonium et d'un monomère vinylique, le ButylMéthAcrylate (BuMA).

Une solution électrochimique a été réalisée en dissolvant 75mg (3.10⁻² M) de NBDT, 440 mg (2.10⁻¹ M) de Et₄NBF₄ dans 10ml d'acétonitrile à laquelle ont été ajoutés 3,2 ml (1,5 M) de BuMA. Un gel d'agarose, préparé selon l'exemple 1, a ensuite été plongé dans cette solution, sous barbotage d'argon, pendant 3 heures.

L'étude électrochimique a été menée par voltampérométrie cyclique en pratiquant 10 balayages de - 0,1 V à - 1 V à la vitesse de 10 mV/s.

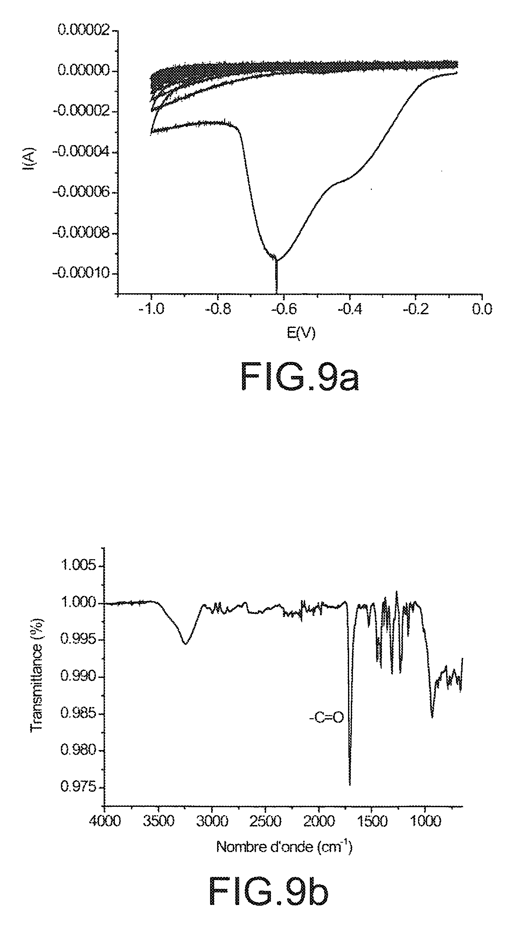

Le voltampérogramme enregistré est donné sur la figure 9a et le spectre FTIR du film greffé, après lavage dans l'acétonitrile aux ultrasons pendant 2 minutes, est représenté sur la figure 9b.

Sur la figure 9a on constate que la réduction des groupements N₂⁺ s'effectue à - 0,35 V et à - 0,6 V lors du premier cycle. L'analyse de la lame par FTIR (figure 9b) montre la présence de la bande ester CO caractéristique du polyBuMA à 1708 cm⁻¹.

Il est donc possible de greffer un polymère sur un substrat métallique en milieu organique (solvant) en utilisant le procédé de l'invention.

### EXEMPLE 6 - EMULSIONS

A titre de composés tensioactifs il a été décidé d'employer le dodécylsulfate de sodium (SDS) qui est commercialement disponible à faible coût.

Le gel a été préparé selon le protocole de l'exemple 1.

### Monomère de butylméthacrylate

Afin de montrer l'application du procédé aux monomères insolubles en milieu aqueux, l'électropolymérisation en émulsion, appliquée au ButylMéthAcrylate (BuMa), monomère vinylique insoluble dans l'eau, a été réalisée.

Une solution électrochimique a été réalisée en dissolvant 50 mg (4,9.10⁻³ M) de SDS dans 20 ml d'eau désionisée. Après une agitation vigoureuse de 15 minutes, 20 ml (3,1M) de BuMA sont introduits et l'agitation est poursuivie pendant 15 minutes. Ensuite, 10, 5 mg (1,1.10⁻³ M) de NBDT et une goutte d'H₂SO₄ ont été ajoutés au milieu. Après 15 minutes d'agitation un gel d'agarose, obtenu selon les modalités de l'exemple 1, a été plongé dans la solution durant 3 heures sous barbotage d'argon.

L'étude électrochimique a été réalisée par voltampérométrie cyclique en pratiquant 10 balayages de - 0,1 V à - 1,8 V à la vitesse de 10 mV/s.

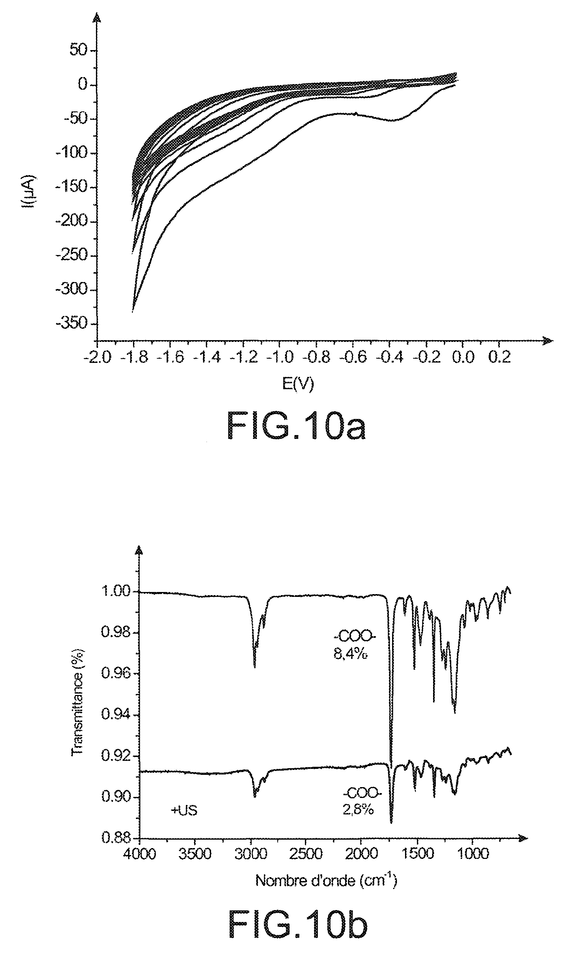

Le voltampérogramme enregistré est représenté à la figure 10a et les spectres FTIR du film avant et après lavage dans le DMF (bon solvant du polymère) aux ultrasons (+US) 2 minutes, sont représentés sur la figure 10b.

On retrouve, sur la figure 10a la réduction des groupements N₂⁺ à - 0,3 V lors du premier cycle de balayage. La figure 10b montre la possibilité d'obtenir un film épais sur lame d'or (valeur de transmittance de la bande ester CO élevée) avant passage aux ultrasons. Les ultrasons permettent de garder seulement la fraction de film greffé et de ce fait la valeur de transmittance est plus faible.

### Monomère d'acétate de vinyle

L'acétate de vinyle (AV), est aussi un monomère peu soluble dans l'eau, de formule chimique : CH₃COOCH=CH₂.

Une solution électrochimique a été réalisée en dissolvant 50mg (4,9.10⁻³ M) de SDS dans 20ml d'eau désionisée. Après une agitation vigoureuse de 15 minutes, 8ml (3,1 M) de AV ont été introduits et l'agitation poursuivie pendant 15 minutes. Ensuite, 10,5 mg (1,1.10⁻³ M) de NBDT et une goutte d'H₂SO₄ ont été ajoutés au milieu. Après 15 minutes d'agitation, le gel a été plongé dans la solution pour une durée de 30 minutes sous barbotage d'argon.

Pour l'étude électrochimique 10 balayages de - 0,35 V à - 1,8 V à la vitesse de 10 mV/s ont été réalisés.

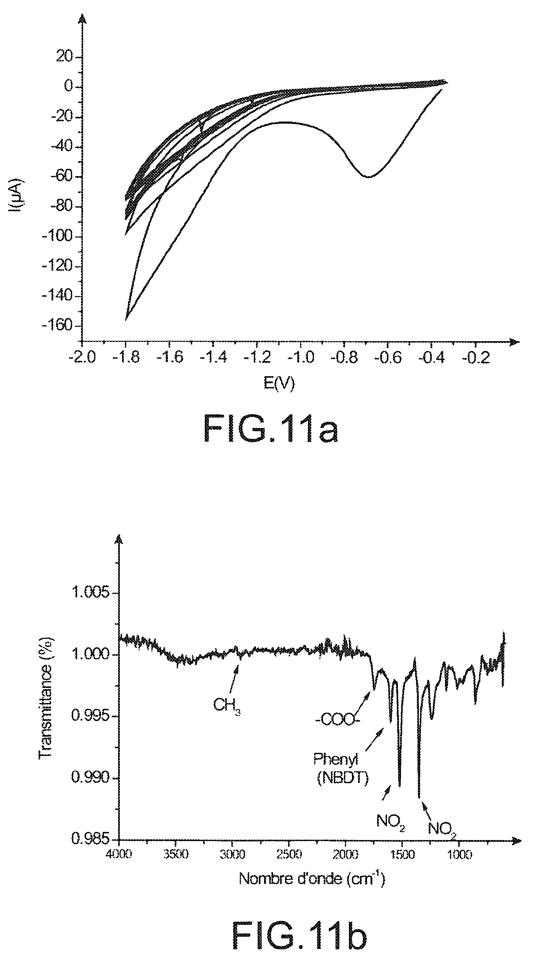

Le voltampérogramme obtenu est rapporté sur la figure 11a et le spectre FTIR du film après lavage dans l'acétone (bon solvant du polymère) aux ultrasons 2 minutes, est représenté sur la figure 11b.

La figure 11a montre que la réduction des groupements N₂⁺ apparaît à - 0,7 V lors du premier balayage de potentiel.

L'analyse FTIR (figure 11b) du spectre réalisé après avoir soumis la lame aux ultrasons pendant 2 minutes dans l'acétone (bon solvant du polyacétate de vinyle), révèle la présence de polynitrophenylène (bande phényle à 1600 cm⁻¹ et bandes nitro à 1524 et 1350 cm⁻¹) et de polyacétate de vinyle (bande acétate à 1743 cm⁻¹).

### Monomère BuMA et émulsifiant neutre : l'éther polyglycolique de lauryle

Une étude identique à la précédente a été réalisée en changeant l'émulsifiant. C'est un agent tensioactif non ionique l'éther polyglycolique de lauryle ou Brij 35^{®} (C₁₂H₂₆(OC₂H₄)ₙOH) qui a été utilisé.

La solution électrochimique renfermait donc 56mg (4,9.10⁻³ M)) de Brij 35^{®} dans 20 ml d'eau désionisée. Après une agitation vigoureuse de 15 minutes, 20ml (3,1 M) de BuMA ont été introduits et l'agitation poursuivie pendant 15 minutes. Ensuite, 10,5 mg (1,1.10⁻³ M) de NBDT et une goutte d'H₂SO₄ ont été ajoutés au milieu. Après 15 minutes d'agitation le gel a été plongé dans la solution pour une durée de 30 minutes sous barbotage d'argon.

Pour l'étude électrochimique 10 balayages de - 0,1V à - 1,8V à la vitesse de 10mV/s ont été réalisés.

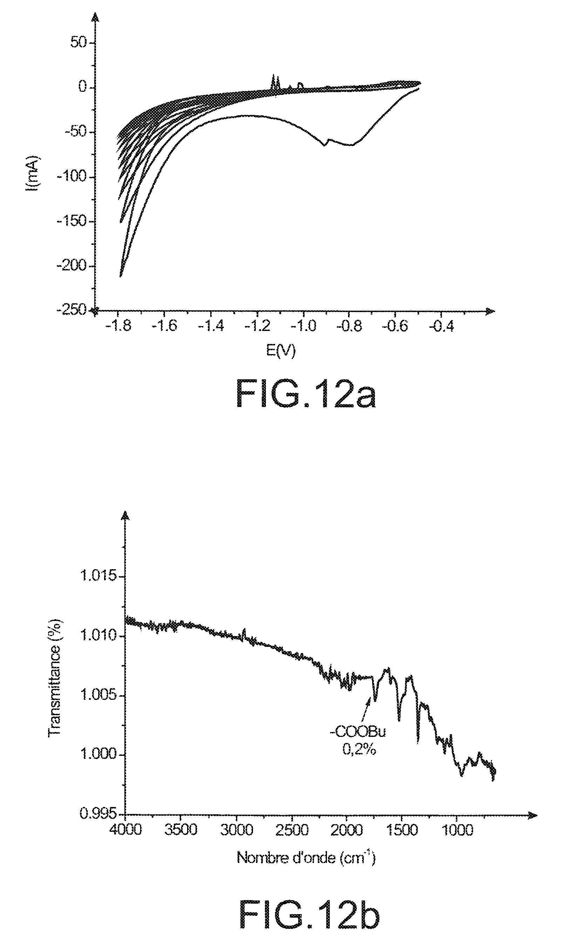

Le voltampérogramme enregistré est donné sur la figure 12a et les spectres FTIR du film après lavage dans le DMF aux ultrasons 2 minutes, sont représentés sur la figure 12b.

Sur la figure 12a, la réduction des groupements N₂⁺ apparaît à - 0,8V lors du premier cycle de balayage. La figure 12b montre le spectre FTIR du polyBuMA avec une faible valeur de transmittance pour les groupements esters. Le tensioactif neutre a permis d'obtenir un film plus fin que le tensioactif anionique utilisé dans les mêmes conditions.

### EXEMPLE 7 - MORPHOLOGIE DU SYSTEME

### Morphologie macroscopique

Cet exemple vise à prouver que le greffage ne s'effectue que dans la zone de contact entre l'électrode et le système colloïdal, comme dans le cas du microcontact printing (Xia Y. Whitesides G. M., « Soft lithography », Angew.Chem.Int.Ed.Engl., 1998, 37, 550).

Pour la réalisation de motif, le gel encore chaud, tel que présenté à l'exemple 1, a été versé dans un moule en téflon dans lequel un relief cruciforme avait été aménagé. Le gel a ensuite été plongé, pendant 3 heures en présence d'un barbotage d'argon, dans une solution électrochimique renfermant 0,0632 g (1,3.10⁻² M) de NBDT, 6,3 ml (2,5 M) d'HydroxyEthylMethAcrylate (HEMA), monomère soluble en milieu aqueux.

L'étude électrochimique a été réalisée par voltampérométrie cyclique en pratiquant 10 balayages de - 0,1 V à - 1,8 V à la vitesse de 10 mV/s.

La lame traitée a été soumise aux ultrasons dans le DMF pendant 2 minutes puis a été plongée dans une solution aqueuse iodée qui permet de mieux visualiser le motif de 10 mm de long et de 1 mm de hauteur.

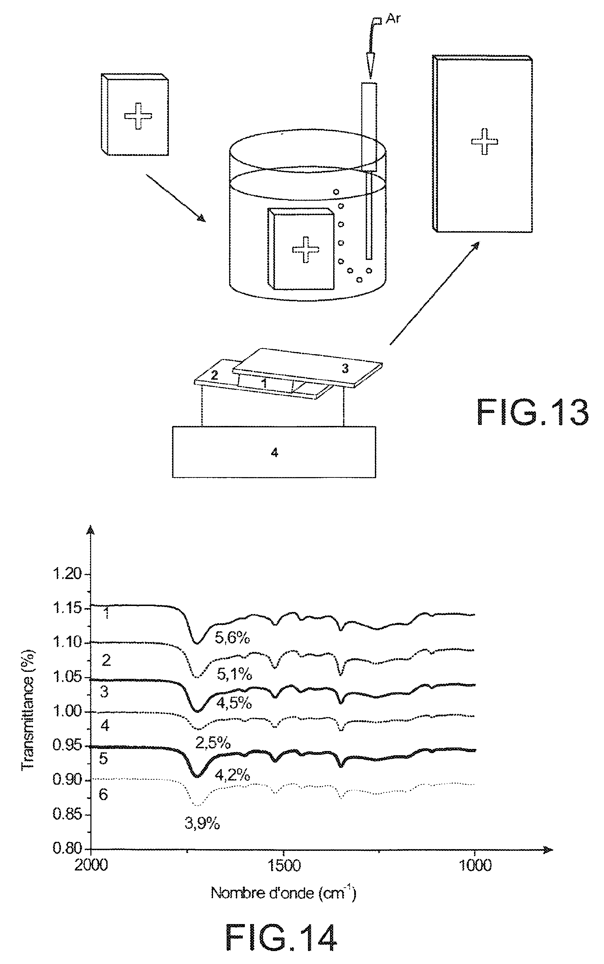

Sur la figure 13, est représenté le gel avec le motif imprimé ainsi que les différentes étapes qui ont conduit au motif greffé sur la lame d'or.

### Morphologie aux échelles sous-macroscopiques

Les exemples qui précèdent ont notamment permis de montrer que les systèmes colloïdaux, selon l'invention, tel qu'un gel, et notamment d'agarose, se comportent comme une cellule électrochimique. L'application du procédé à de tels systèmes permet de greffer, en milieu aqueux ou organique, des films polymériques d'environ 30 nm (mesurée au profilomètre) sur des surfaces conductrices ou semi-conductrices de l'électricité, telles que des surfaces d'or.

Il a également été montré que de manière simple et efficace il était possible d'obtenir des films copolymériques en mettant en oeuvre le procédé. En outre il a été montré que le procédé pouvait également mettre en oeuvre des émulsions, notamment lorsqu'un monomère vinylique insoluble dans l'eau doit être employé.

Par ailleurs, il apparait que le procédé assure l'avantage de pouvoir greffer localement, avec une topographie choisie d'échelle variable, un film polymère sur une surface.

Le gel d'agarose qui illustre les exemples se comporte comme un produit adapté pour réaliser le greffage d'un film de polymère hors boite à gants, sur un substrat métallique transportable ou non, en position verticale ou horizontale. La réalisation du gel est aisée et de plus c'est un produit non toxique. Son utilisation en milieu aqueux avec un monomère soluble ou insoluble (émulsion) est également favorable pour une exploitation industrielle.

### EXEMPLE 8 - REPRODUCTIBILITE

Pour cette étude un gel d'agarose préparé selon l'exemple 1 a été utilisé. Comme précédemment, cette étude a été réalisée avec l'acide acrylique et le sel de diazonium dans les mêmes conditions que dans l'exemple 3. Après avoir plongé le gel d'agarose dans la solution électrochimique pendant 30 minutes en présence d'un barbotage d'argon il a été soumis à plusieurs séries de 10 cycles en voltampérométrie. Pour cela, une lame d'or différente a été utilisée après chaque série et le gel n'a pas été remis en contact avec la solution électrochimique.

Les spectres FTIR, réalisés après avoir soumis les lames aux ultrasons dans l'eau 2 minutes sont représentés sur la figure 14. Les résultats indiquent que le gel peut être utilisé plusieurs fois en conduisant à des films d'épaisseur convenable.

## Revendications

1. Procédé de formation d'un film organique sur une surface conductrice ou semi-conductrice de l'électricité par application d'un potentiel électrique entre un gel, au contact de ladite surface, et ladite surface, **caractérisé en ce que** le gel comprend :
- un solvant protique,
- au moins un composé à propriétés colloïdales,
- au moins un primaire d'adhésion,
et **en ce que** le potentiel appliqué est au moins égal au potentiel de réduction du primaire d'adhésion.

2. Procédé selon la revendication 1, **caractérisé en ce que** ledit solvant protique est choisi dans le groupe constitué par l'eau, l'acide acétique, les solvants hydroxylés, les glycols liquides, et leurs mélanges, ledit solvant protique étant, de préférence, l'eau.

3. Procédé selon la revendication 1 ou 2, **caractérisé en ce que** ledit primaire d'adhésion est un sel d'aryle clivable choisi dans le groupe constitué par les sels d'aryle diazonium, les sels d'aryle d'ammonium, les sels d'aryle phosphonium et les sels d'aryle sulfonium.

4. Procédé selon l'une quelconque des revendications précédentes, **caractérisé en ce que** ledit primaire d'adhésion est un sel d'aryle clivable de formule (I) :
R-N₂⁺, A⁻ (I)
dans laquelle :
- A représente un anion monovalent, et,
- R représente un groupe aryle et, de préférence, un groupe aryle choisi parmi les groupes aryles substitués par des groupements attracteurs d'électrons tels que NO₂, COH, les cétones, CN, CO₂H, NH₂, les esters et les halogènes.

5. Procédé selon la revendication 4, **caractérisé en ce que** ledit primaire d'adhésion est choisi dans le groupe constitué par le tétrafluoroborate de phényldiazonium, le tétrafluoroborate de 4-nitrophényldiazonium, le tétrafluoroborate de 4-bromophényldiazonium, le chlorure de 4-aminophényldiazonium, le chlorure de 2-méthyl-4-chlorophényldiazonium, le tétrafluoroborate de 4-benzoylbenzènediazonium, le tétrafluoroborate de 4-cyanophényldiazonium, le tétrafluoroborate de 4-carboxyphényldiazonium, le tétrafluoroborate de 4-acétamidophényldiazonium, le tétrafluoroborate de l'acide 4-phénylacétique diazonium, le sulfate de 2-méthyl-4-[(2-méthylphényl)diazényl]benzènediazonium, le chlorure de 9,10-dioxo-9,10-dihydro-1-anthracènediazonium, le tétrafluoroborate de 4-nitronaphtalènediazonium et le tétrafluoroborate de naphtalènediazonium.

6. Procédé selon la revendication 4 ou 5, **caractérisé en ce que** le pH au sein du gel est compris entre 0 et 3.

7. Procédé selon l'une quelconque des revendications 1 à 6, **caractérisé en ce que** ledit composé à propriétés colloïdales est un polymère organique, ledit polymère organique étant, de préférence, choisi parmi les polysaccharides, le polyacrylamide et ses dérivés.

8. Procédé selon la revendication 7, **caractérisé en ce que** ce que ledit polymère organique est choisi parmi l'agarose, le chitosan, le xanthane, le carraghénane, l'agar, l'alginate et leurs mélanges.

9. Procédé selon l'une quelconque des revendications 1 à 8, **caractérisé en ce que** ce que ledit potentiel est appliqué par polarisation en conditions de voltampérométrie linéaire ou cyclique, en conditions potentiostatiques, potentiodynamiques, intensiostatiques, galvanostatiques, galvanodynamiques ou par chronoampérométrie simple ou pulsée.

10. Procédé selon l'un quelconque des revendications 1 à 9, **caractérisé en ce que** ce que ledit gel comporte en outre au moins un monomère polymérisable par voie radicalaire différent du primaire d'adhésion, ledit monomère étant, de préférence, de formule (II) suivante : 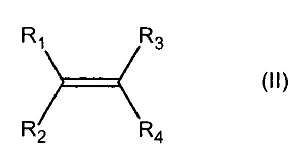 dans laquelle les groupes R₁ à R₄, identiques ou différents, représentent un atome monovalent non métallique tel qu'un atome d'halogène ou un atome d'hydrogène, ou un groupe chimique saturé ou insaturé, tel qu'une structure carbonée et notamment un groupe alkyle, aryle, un groupe -COOR₅ dans lequel R₅ représente un atome d'hydrogène ou un groupe alkyle en C₁-C₆, nitrile, carbonyle, amine ou amide.

11. Procédé selon la revendication 10, **caractérisé en ce que** ledit monomère est choisi parmi l'acide acrylique, l'acétate de vinyle, l'acrylonitrile, le méthacrylonitrile, le méthacrylate de méthyle, le méthacrylate d'éthyle, le méthacrylate de butyle, le méthacrylate de propyle, le méthacrylate d'hydroxyéthyle (HEMA), le méthacrylate d'hydroxypropyle, le méthacrylate de glycidyle ; les acrylamides et notamment les méthacrylamides d'amino-éthyle, propyle, butyle, pentyle et hexyle, les cyanoacrylates, les di-acrylates et di-méthacrylates, les tri-acrylates et tri-méthacrylates, les tétra-acrylates et tétra-méthacrylates (tels que le pentaérythritol tetraméthacrylate), le styrène et ses dérivés, le parachloro-styrène, le pentafluoro-styrène, la N-vinyl pyrrolidone, la 4-vinyl pyridine, la 2-vinyl pyridine, les halogénures de vinyle, d'acryloyle ou de méthacryloyle, le di-vinylbenzène (DVB).

12. Procédé selon l'une quelconque des revendications précédentes, **caractérisé en ce que** ce que ledit gel comporte un tensioactif et/ou au moins un électrolyte choisi parmi les perchlorates, les tosylates, les tetrafluoroborates, les hexafluorophosphates, les halogénures d'ammonium quaternaire, le nitrate de sodium et le chlorure de sodium.

13. Procédé selon l'un quelconque des revendications précédentes, **caractérisé en ce que** ledit procédé comporte les étapes supplémentaires suivantes :
- préparation du gel à partir d'au moins un composé à propriétés colloïdales et du solvant protique,
- diffusion d'au moins un primaire d'adhésion, et éventuellement d'au moins un monomère, dans le gel.

14. Procédé selon l'un quelconque des revendications 1 à 12, **caractérisé en ce que** le procédé comporte en outre l'étape suivante :
- préparation du gel à partir d'au moins un composé à propriétés colloïdales, d'un solvant protique, d'au moins un primaire d'adhésion, et éventuellement d'au moins un monomère.

15. Gel comprenant un solvant protique tel que défini à la revendications 1 ou 2, au moins un composé à propriétés colloïdales tel que défini à l'une quelconque des revendications 1, 7 ou 8, au moins un primaire d'adhésion tel que défini à l'une quelconque des revendications 1 ou 3 à 5 et éventuellement au moins un monomère tel que défini dans la revendication 10 ou 11.

16. Utilisation d'un gel selon la revendication 15, comme cellule électrochimique pour réaliser l'électrogreffage d'un film organique sur une surface conductrice ou semi-conductrice de l'électricité ou pour réaliser un greffage localisé.

17. Kit de formation d'un film organique sur une surface conductrice ou semi-conductrice de l'électricité, comprenant un gel, constitué d'un solvant protique tel que défini à la revendication 1 ou 2 et d'au moins un composé à propriétés colloïdales tel que défini à l'une quelconque des revendications 1, 7 ou 8, physiquement séparé d'une solution d'au moins un primaire d'adhésion tel que défini à l'une quelconque des revendications 1 ou 3 à 5, avec éventuellement au moins un monomère tel que défini dans la revendication 10 ou 11, dans un solvant protique identique ou différent et tel que défini à la revendication 1 ou 2, ledit kit comprenant, éventuellement, des moyens électriques susceptibles de générer un potentiel.

## Patentansprüche

1. Verfahren zur Herstellung eines organischen Films auf einer elektrisch leitenden oder halbleitenden Oberfläche durch Anlegen eines elektrischen Potentials zwischen einem Gel in Kontakt mit dieser Oberfläche und dieser Oberfläche, **dadurch gekennzeichnet, dass** das Gel folgendes umfasst:
- ein protisches Lösungsmittel,
- wenigstens eine Verbindung mit Kolloideigenschaften,
- wenigstens einen Haftgrund,
und dadurch, dass das angelegte Potential mindestens gleich dem Reduktionspotential des Haftgrunds ist.

2. Verfahren gemäß Anspruch 1, dadurch gekennzeichet, dass das protische Lösungsmittel aus der Gruppe ausgewählt ist, die sich aus Wasser, Essigsäure, hydroxylierten Lösungsmitteln, flüssigen Glykolen und deren Gemischen zusammensetzt, wobei das protische Lösungsmitten vorzugsweise Wasser ist.

3. Verfahren gemäß Anspruch 1 oder 2, **dadurch gekennzeichnet, dass** der Haftgrund ein spaltbares Arylsalz ist, das aus der Gruppe ausgewählt ist, die sich aus Aryldiazoniumsalzen, Arylammoniumsalzen, Arylphosphoniumsalzen und Arylsulfoniumsalzen zusammensetzt.

4. Verfahren gemäß einem der vorangehenden Ansprüche, **dadurch gekennzeichnet, dass** der Haftgrund ein spaltbares Arylsalz der Formel (I) ist:
R-N₂⁺, A⁻ (I)
worin
- A ein einwertiges Anion bedeutet und
- R eine Arylgruppe und vorzugsweise eine Arylgruppe bedeutet, die aus Arylgruppen ausgewählt ist, die durch elektronenziehende Gruppen wie etwa NO₂, COH, Ketone, CN, CO₂H, NH₂, Ester und Halogene substituiert sind.

5. Verfahren gemäß Anspruch 4, **dadurch gekennzeichnet, dass** der Haftgrund aus der Gruppe ausgewählt ist, die sich aus Phenyldiazoniumtetrafluorborat, 4-Nitrophenyldiazoniumtetrafluorborat, 4-Bromphenyldiazoniumtetrafluorborat, 4-Aminophenyldiazoniumchlorid, 2-Methyl-4-chlorphenyldiazoniumchlorid, 4-Benzoylbenzoldiazoniumtetrafluorborat, 4-Cyanphenyldiazoniumtetrafluorborat, 4-Carboxyphenyldiazoniumtetrafluorborat, 4-Acetamidophenyldiazoniumtetrafluorborat, 4-Phenylessigsäurediazoniumtetrafluorborat, 2-Methyl-4-[(2-methylphenyl)diazenyl]-benzoldiazoniumsulfat, 9,10-Dioxo-9,10-dihydro-1-anthracendiazoniumchlorid, 4-Nitronaphthalindiazoniumtetrafluorborat und Naphthalindiazoniumtetrafluorborat zusammensetzt.

6. Verfahren gemäß Anspruch 4 oder 5, **dadurch gekennzeichnet, dass** der pH innerhalb des Gels zwischen 0 und 3 beträgt.

7. Verfahren gemäß einem der Ansprüche 1 bis 6, **dadurch gekennzeichnet, dass** die Verbindung mit Kolloideigenschaften ein organisches Polymer ist, wobei das organische Polymer vorzugsweise aus Polysacchariden, Polyacrylamid und seinen Derivaten ausgewählt ist.

8. Verfahren gemäß Anspruch 7, **dadurch gekennzeichnet, dass** das organische Polymer aus Agarose, Chitosan, Xanthan, Carrageenan, Agar, Alginat und deren Gemischen ausgewählt ist.

9. Verfahren gemäß einem der Ansprüche 1 bis 8, **dadurch gekennzeichnet, dass** das Potential durch Polarisation unter Bedingungen einer linearen oder cyclischen Voltammetrie, unter potentiostatischen, potentiodynamischen, intensiostatischen, galvanostatischen oder galvanodynamischen Bedingungen oder durch einfache oder gepulste Chronoamperometrie angelegt wird.

10. Verfahren gemäß einem der Ansprüche 1 bis 9, **dadurch gekennzeichnet, dass** das Gel außerdem wenigstens ein von dem Haftgrund verschiedenes, radikalisch polymerisierbares Monomer umfasst, wobei das Monomer vorzugsweise die folgende Formel (II) aufweist: 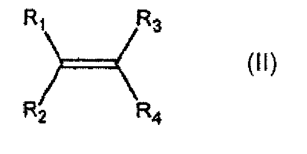 worin die Gruppen R₁ bis R₄, die gleich oder verschieden sind, ein einwertiges Nichtmetallatom wie etwa ein Halogenatom oder Wasserstoffatom oder eine gesättigte oder ungesättigte chemische Gruppe wie etwa eine kohlenstoffhaltige Struktur und insbesondere eine Alkyl- oder Arylgruppe, eine Gruppe -COOR₅, worin R₅ ein Wasserstoffatom oder eine C₁-C₆-Alkylgruppe bedeutet, Nitril, Carbonyl, Amin oder Amid bedeuten.

11. Verfahren gemäß Anspruch 10, dadurch gekennzeichet, dass das Monomer aus Acrylsäure, Vinylacetat, Acrylnitril, Methacrylnitril, Methylmethacrylat, Ethylmethacrylat, Butylmethacrylat, Propylmethacrylat, Hydroxyethylmethycrylat (HEMA), Hydroxypropylmethacrylat, Glycidylmethacrylat; Acrylamiden und insbesondere Aminoethyl-, Propyl-, Butyl-, Pentyl- und Hexylmethacrylamiden, Cyanacrylaten, Diacrylaten und Dimethacrylaten, Triacrylaten und Trimethacrylaten, Tetraacrylaten und Tetramethacrylaten (wie etwa Pentaerythrittetramethacrylat), Styrol und seinen Derivaten, p-Chtorstyrol, Pentafluorstyrol, N-Vinylpyrrolidon, 4-Vinylpyridin, 2-Vinylpyridin, Vinyl-, Acryloyl- oder Methacryloylhalogeniden und Divinylbenzol (DVB) ausgewählt ist.

12. Verfahren gemäß einem der vorangehenden Ansprüche, **dadurch gekennzeichnet, dass** das Gel ein Tensid und/oder wenigstens einen Elektrolyten umfasst, die aus Perchloraten, Tosylaten, Tetrafluorboraten, Hexafluorphosphaten, quaternären Ammoniumhalogeniden, Natriumnitrat und Natriumchlorid ausgewählt sind.

13. Verfahren gemäß einem der vorangehenden Ansprüche, **dadurch gekennzeichnet, dass** das Verfahren die folgenden zusätzlichen Schritte umfasst:
- Herstellung des Gels aus wenigstens einer Verbindung mit Kolloideigenschaften und aus dem protischen Lösungsmittel,
- Diffusion wenigstens eines Haftgrunds und gegebenenfalls wenigstens eines Monomers in das Gel.

14. Verfahren gemäß einem der Ansprüche 1 bis 12, **dadurch gekennzeichnet, dass** das Verfahren außerdem den folgenden Schritt umfasst:
- Herstellung des Gels aus wenigstens einer Verbindung mit Kolloideigenschaften, einem protischen Lösungsmittel, wenigstens einem Haftgrund und gegebenenfalls wenigstens einem Monomer.

15. Gel umfassend ein protisches Lösungsmittel wie in Anspruch 1 oder 2 definiert, wenigstens eine Verbindung mit Kolloideigenschaften wie in einem der Ansprüche 1, 7 oder 8 definiert, wenigstens einen Haftgrund wie in einem der Ansprüche 1 oder 3 bis 5 definiert und gegebenenfalls wenigstens ein Monomer wie in Anspruch 10 oder 11 definiert.

16. Verwendung eines Gels gemäß Anspruch 15 als elektrochemische Zelle zum Durchführen einer Elektropfropfung eines organischen Films auf eine elektrisch leitende oder halbleitende Oberfläche oder zum Durchführen einer lokalisierten Pfropfung.

17. Kit zum Bilden eines organischen Films auf einer elektrisch leitenden oder halbleitenden Oberfläche, umfassend ein Gel, das sich aus einem protischen Lösungsmittel wie in Anspruch 1 oder 2 definiert und aus wenigstens einer Verbindung mit Kolloideigenschaften wie in einem der Ansprüche 1, 7 oder 8 definiert zusammensetzt, und physisch getrennt ist von einer Lösung wenigstens eines Haftgrunds wie in einem der Ansprüche 1 oder 3 bis 5 definiert, mit gegebenenfalls wenigstens einem Monomer wie in Anspruch 10 oder 11 definiert, in einem protischen Lösungsmittel wie in Anspruch 1 oder 2 definiert, das gleich oder verschieden ist, wobei der Kit gegebenenfalls elektrische Mittel umfasst, die ein Potential erzeugen können.

## Claims

1. Process for forming an organic film on an electrically conductive or semiconductive surface by application of an electric potential between a gel, in contact with said surface, and said surface, **characterized in that** the gel comprises:
- a protic solvent;
- at least one compound having colloidal properties;
- at least one adhesion primer;
and **in that** the potential applied is at least equal to the reduction potential of the adhesion primer.

2. Process according to claim 1, **characterized in that** said protic solvent is chosen from the group consisting of water, acetic acid, hydroxylated solvents, liquid glycols, and mixtures thereof, said protic solvent being preferably water.

3. Process according to claim 1 or 2, **characterized in that** said adhesion primer is a cleavable aryl salt chosen from the group consisting of aryl diazonium salts, aryl ammonium salts, aryl phosphonium salts and aryl sulphonium salts.

4. Process according to any one of the preceding claims, **characterized in that** said adhesion primer is a cleavable aryl salt of formula (I):
R-N₂⁺, A⁻ (I)
in which:
- A represents a monovalent anion; and
- R represents an aryl group and, preferably, an aryl group chosen from aryl groups substituted by electron-withdrawing groups such as NO₂, COH, ketones, CN, CO₂H, NH₂, esters and halogens.

5. Process according to claim 4, **characterized in that** said adhesion primer is chosen from the group consisting of phenyldiazonium tetrafluoroborate, 4-nitrophenyldiazonium tetrafluoroborate, 4-bromophenyldiazonium tetrafluoroborate, 4-aminophenyldiazonium chloride, 2-methyl-4-chlorophenyldiazonium chloride, 4-benzoylbenzenediazonium tetrafluoroborate, 4-cyanophenyldiazonium tetrafluoroborate, 4-carboxyphenyldiazonium tetrafluoroborate, 4-acetamidophenyldiazonium tetrafluoroborate, 4-phenylacetic acid diazonium tetrafluoroborate, 2-ethyl-4-[(2-methylphenyl)diazenyl]benzenediazonium sulphate, 9,10-dioxo-9,10-dihydro-1-anthracenediazonium chloride, 4-nitro-naphthalenediazonium tetrafluoroborate and naphthalenediazonium tetrafluoroborate.

6. Process according to claim 4 or 5, **characterized in that** the pH within the gel is between 0 and 3.

7. Process according to any one of claims 1 to 6, **characterized in that** said compound having colloidal properties is an organic polymer, said organic polymer being preferably chosen from polysaccharides, and polyacrylamide and its derivatives.

8. Process according to claim 7, **characterized in that** said organic polymer is chosen from agarose, chitosan, xanthan, carrageenan, agar, alginate and mixtures thereof.

9. Process according to any one of claims 1 to 8, **characterized in that** said potential is applied by polarization under linear or cyclic voltammetry conditions, under potentiostatic, potentiodynamic, intensiostatic, galvanostatic or galvanodynamic conditions or by simple or pulse chronoamperometry.

10. Process according to any one of claims 1 to 9, **characterized in that** said gel furthermore comprises at least one radical-polymerizable monomer different from the adhesion primer, said monomer being preferably of formula (II) below: 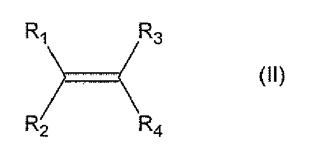 in which the R₁ to R₄ groups, which are identical or different, represent a non-metallic monovalent atom such as a halogen atom or a hydrogen atom, or a saturated or unsaturated chemical group, such as a carbon-based structure and especially an alkyl or aryl group, a -COOR₅ group in which R₅ represents a hydrogen atom or a C₁-C₆ alkyl, nitrile, carbonyl, amine or amide group.

11. Process according to claim 10, **characterized in that** said monomer is chosen from acrylic acid, vinyl acetate, acrylonitrile, methacrylonitrile, methyl methacrylate, ethyl methacrylate, butyl methacrylate, propyl methacrylate, hydroxyethyl methacrylate (HEMA), hydroxypropyl methacrylate, glycidyl methacrylate; acrylamides and especially amino-ethyl, propyl, butyl, pentyl and hexyl methacrylamides, cyanoacrylates, diacrylates and dimethacrylates, triacrylates and trimethacrylates, tetraacrylates and tetramethacrylates (such as pentaerythritol tetramethacrylate), styrene and its derivatives, para-chlorostyrene, pentafluoro-styrene, N-vinyl pyrrolidone, 4-vinyl pyridine, 2-vinyl pyridine, vinyl, acryloyl or methacryloyl halides, and di-vinylbenzene (DVB).

12. Process according to any one of the preceding claims, **characterized in that** said gel comprises a surfactant and/or at least one electrolyte chosen from quaternary ammonium perchlorates, tosylates, tetrafluoroborates, hexafluorophosphates or halides, sodium nitrate and sodium chloride.

13. Process according to any one of the preceding claims, **characterized in that** said process comprises the following supplementary steps:
- preparation of the gel from at least one compound having colloidal properties and from the protic solvent;
- diffusion of at least one adhesion primer, and optionally of at least one monomer, in the gel.

14. Process according to any one of claims 1 to 12, **characterized in that** the process furthermore comprises the following step:
- preparation of the gel from at least one compound having colloidal properties, from a protic solvent, from at least one adhesion primer and optionally from at least one monomer.

15. Gel comprising a protic solvent as defined in claim 1 or 2, at least one compound having colloidal properties as defined in any one of claims 1, 7 or 8, at least one adhesion primer as defined in any one of claims 1 or 3 to 5 and optionally at least one monomer as defined in claim 10 or 11.

16. Use of a gel according to claim 15, as an electrochemical cell for carrying out electrografting of an organic film onto an electrically conductive or semiconductive surface or for carrying out localized grafting.

17. Kit for forming an organic film on an electrically conductive or semiconductive surface, comprising a gel, constituted of a protic solvent as defined in claim 1 or 2 and of at least one compound having colloidal properties as defined in any one of claims 1, 7 or 8, physically separate from a solution of at least one adhesion primer as defined in any one of claims 1 or 3 to 5, optionally with at least one monomer as defined in claim 10 or 11, in a protic solvent that is identical or different and as defined in claim 1 or 2, said kit optionally comprising electrical means capable of generating a potential.
